# EUROPEAN PATENT SPECIFICATION

(11) **EP 1 810 128 B1**
(45) Date of publication and mention of the grant of the patent: **11.11.2009**
(21) Application number: 05792308.8
(22) Date of filing: 30.08.2005
(51) Int. Cl.: G06F 9/38

(54) **METHODS AND APPARATUS FOR BRANCH PREDICTION AND PROCESSING OF MICROPROCESSOR INSTRUCTIONS AND THE LIKE**
VERFAHREN UND VORRICHTUNGEN ZUR ZWEIGVORHERSAGE UND VERARBEITUNG VON MIKROPROZESSORANWEISUNGEN UND DERGLEICHEN
PROCEDES ET APPAREIL DE PREDICTION DE BRANCHEMENTS ET DE TRAITEMENT D'INSTRUCTIONS DE MICROPROCESSEURS ET ANALOGUE

(30) Priority: 30.08.2004 US 605837 P; 24.08.2005 US 210428
(43) Date of publication of application: 25.07.2007
(73) Proprietor: Texas Instruments Incorporated, Dallas, Texas 75265-5474 (US)
(72) Inventor: TRAN, Thang, Austin, TX 78733 (US)
(74) Representative: Holt, Michael
(86) International application number: PCT/US2005/030565
(87) International publication number: WO 2006/026510

(56) References cited:
- EP-A- 0 401 992
- WO-A-97/42567
- US-A- 5 287 467
- US-A- 5 822 575
- US-A- 5 857 089
- US-A- 6 081 887

## Description

This invention relates to methods and apparatus in the field of information and communications processing, and more specifically to methods and apparatus for improved branch prediction and processing of instructions for microprocessors and the like.

### BACKGROUND

Without limitation, the background is further described in connection with wireless communications processing. Improved processors, such as RISC (Reduced Instruction Set Computing) processors and digital signal processing (DSP) chips and/or other integrated circuit devices are essential to these systems and applications. Reducing the cost of manufacture, increasing the efficiency of executing more instructions per cycle, and addressing power dissipation without compromising performance are important goals in RISC processors, DSPs, integrated circuits generally and system-on-a-chip (SOC) designs. These goals become even more important in handheld and mobile applications where small size is so important, to control the cost and the power consumed.

In high performance microprocessors, instructions often are fetched, decoded, and executed in assembly-line fashion, called a pipeline. For high performance purposes, a microprocessor may put instructions subsequent to a branch instruction into the pipeline to fetch, decode, and execute, even when the branch instruction has not yet been executed. This process is called branch prediction, which is a not-fully-certain prediction of whether a given branch instruction will take or not-take a branch. However, if a branch prediction is wrong, the instructions in the pipeline and any improvidently computed results from them will have to be "flushed" and replaced with a different sequence of instructions based on the actual branch determined when the branch instruction is actually executed. A pipeline flush entails a substantial amount of wasted time and degrades the performance which is so important in a high-performance microprocessor.

Branch prediction circuitry of various types hitherto have been provided to predict the behavior of branch instructions in software, with the goal of delivering instructions for execution in the pipeline that reflect the actual order of branching that will occur. However, the prior art approaches still fall short of the goal of perfect branch prediction, imposing power dissipation problems, and introduce complexities for the pipestages, and limit processor speed.

European Patent Application No. 0 401 992 discloses a super-scalar processor where branch-prediction information is provided within an instruction cache memory. Each instruction cache block stored in the instruction cache memory includes branch-prediction information fields in addition to instruction fields, which indicate the address of the instruction block's successor and information indicating the location of a branch instruction within the instruction block. This allows a next cache block to be easily fetched without waiting on a decoder or execution unit to indicate the proper fetch action to be taken.

United States Patent No. 5,287, 467 discloses a multi-pipelined digital computer where branch instructions from the execution pipelines are detected and up to two of the detected instructions are processed concurrently in parallel with the operations of the execution pipelines. Certain branch instructions, when detected, are removed altogether from the pipeline, but still processed. The processing is synchronized with the execution pipeline to, first, predict an outcome for detected branch instructions, second, test the conditions for branch instructions at their proper place in the execution sequence to determine whether the predicted outcome was correct, and third, fetch a corrected target instruction if the prediction proves wrong.

### SUMMARY

The invention resides in a processor and a method of operating a processor as set out in the appended claims.

Other forms of the invention involve wireless communications devices, systems, circuits, devices, branch prediction processes and methods of operation, processes of manufacture, and articles of manufacture, as disclosed and claimed.

### BRIEF DESCRIPTION OF THE DRAWINGS

FIG. 1 is a pictorial diagram of a communications system including a cellular base station, two cellular telephone handsets, a WLAN AP (wireless local area network access point), a WLAN gateway, a personal computer (PC), a WLAN station on the PC, and any one, some or all of the foregoing improved according to the invention.
FIG. 2 is a block diagram of an inventive integrated circuit chip with any subset or all of the chip circuits for use in the blocks of the communications system of FIG. 1.
FIG. 3 is a block diagram of an improved processor of the invention for use in the integrated circuits of FIG. 2 and includes a pipeline diagram of inventive circuitry and coupled structures including pipelined precise branch prediction circuit blocks at fetch stages, message passing bus back from an execute stage, and pointer-based FIFO 1860 communicating predicted target addresses to execute stage.
FIGS. 4 A and 4B are upper and lower portions of a partially-block, partially schematic diagram of inventive branch prediction circuitry, pointer-based FIFO and instruction cache.
FIG. 5 is a partially-schematic, partially-block diagram further detailing inventive branch decoding and prediction circuitry of FIG. 4A including a working global history register wGHR for predictions, and an architectural global history register aGHR for actual branch history.
FIG. 6 is a partially-schematic, partially-block diagram further detailing inventive global history buffer circuitry and related branch target buffer circuitry of FIG. 4A driven by the circuitry of FIG. 5 for making high-accuracy branch predictions;
FIG. 7 is a partially-schematic, partially-block diagram further detailing inventive execution circuitry of FIG. 3 with message-passing circuitry back to fetch and fed by pointer-based FIFO circuitry with predicted taken target addresses supplied from fetch.
FIG. 8 is a flow diagram of a method embodiment of inventive branch prediction.
FIG. 9 is a flow diagram of another method embodiment of inventive branch prediction.

### DETAILED DESCRIPTION OF EMBODIMENTS

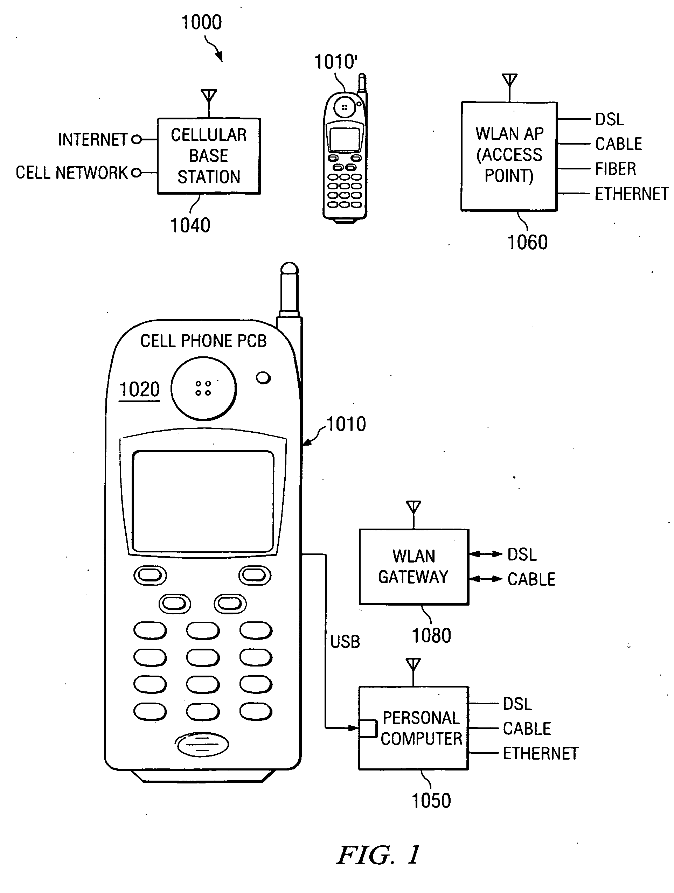

In FIG. 1, an improved communications system 1000 has system blocks with increased metrics of features per watt of power dissipation, cycles per watt, features per unit cost of manufacture, and greater throughput of instructions per cycle, among other advantages.

Any or all of the system blocks, such as cellular mobile telephone and data handsets 1010 and 1010', a cellular (telephony and data) base station 1040, a WLAN AP (wireless local area network access point, IEEE 802.11 or otherwise) 1060, a Voice WLAN gateway 1080 with user voice over packet telephone, and a voice enabled personal computer (PC) 1050 with another user voice over packet telephone, communicate with each other in communications system 1000. Each of the system blocks 1010, 1010', 1040, 1050, 1060, 1080 are provided with one or more PHY physical layer blocks and interfaces as selected by the skilled worker in various products, for DSL (digital subscriber line broadband over twisted pair copper infrastructure), cable (DOCSIS and other forms of coaxial cable broadband communications), premises power wiring, fiber (fiber optic cable to premises), and Ethernet wideband network. Cellular base station 1040 two-way communicates with the handsets 1010, 1010', with the Internet, with cellular communications networks and with PSTN (public switched telephone network).

In this way, advanced networking capability for services, software, and content, such as cellular telephony and data, audio, music, voice, video, e-mail, gaming, security, e-commerce, file transfer and other data services, internet, world wide web browsing, TCP/IP (transmission control protocol/Internet protocol), voice over packet and voice over Internet protocol (VoP/VoIP), and other services accommodates and provides security for secure utilization and entertainment appropriate to the just-listed and other particular applications, while recognizing market demand for different levels of security.

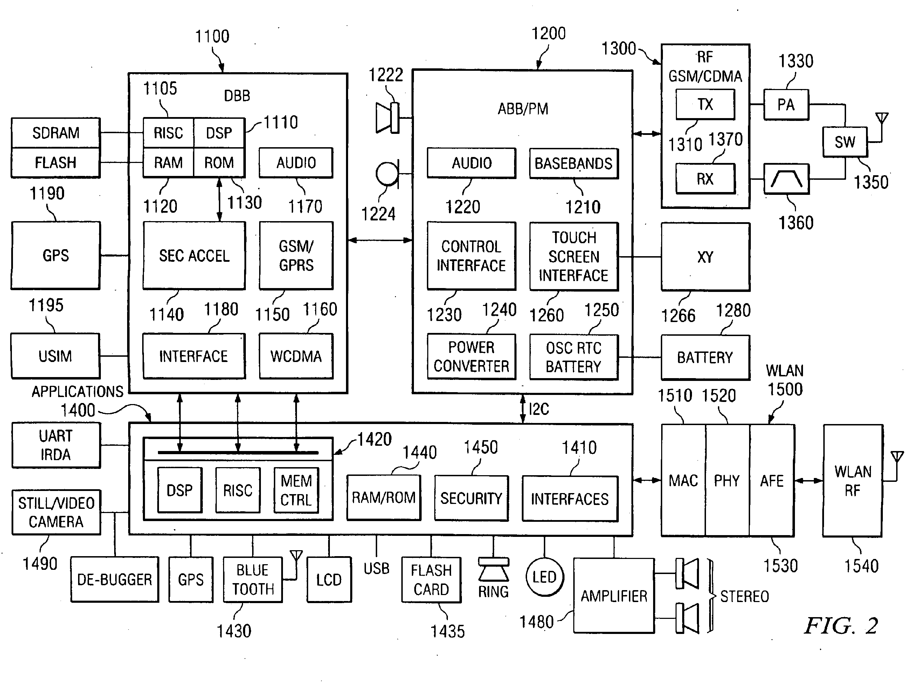

In FIG. 2, an integrated circuit 1100 includes a digital baseband (DBB) block 1110 that has a RISC processor (such as MIPS core, ARM processor, or other suitable processor) 1105, a digital signal processor (DSP) 1110, communications software and security software for any such processor or core, security accelerators 1140, and a memory controller. The memory controller interfaces the RISC and the DSP to Flash memory and SDRAM (synchronous dynamic random access memory). The memories are improved by any one or more of the processes herein. On chip RAM 1120 and on-chip ROM 1130 also are accessible to the processors 1105 and 1110 for providing sequences of software instructions and data thereto.

Digital circuitry 1150 provides wireless interfaces for any of GSM, GPRS, EDGE, UMTS, and OFDMA/MIMO (Global System for Mobile communications, General Packet Radio Service, Enhanced Data Rates for Global Evolution, Universal Mobile Telecommunications System, Orthogonal Frequency Division Multiple Access and Multiple Input Multiple Output Antennas) wireless, with high speed digital data service, via an analog baseband chip 1200 and GSM transmit/receive chip 1300. Digital circuitry 1150 includes ciphering processor CRYPT for GSM ciphering and/or other encryption/decryption purposes. Blocks TPU (Time Processing Unit real-time sequencer), TSP (Time Serial Port), GEA (GPRS Encryption Algorithm block for ciphering at LLC logical link layer), RIF (Radio Interface), and SPI (Serial Port Interface) are included in digital circuitry 1150.

Digital circuitry 1160 provides codec for CDMA (Code Division Multiple Access), CDMA2000, and/or WCDMA (wideband CDMA) wireless with or without an HSDPA/HSUPA (High Speed Downlink Packet Access, High Speed Uplink Packet Access) (or 1xEV-DV, 1xEV-DO or 3xEV-DV) data feature via the analog baseband chip 1200 and an RF GSM/CDMA chip 1300. Digital circuitry 1160 includes blocks MRC (maximal ratio combiner for multipath symbol combining), ENC (encryption/decryption), RX (downlink receive channel decoding, de-interleaving, viterbi decoding and turbo decoding) and TX (uplink transmit convolutional encoding, turbo encoding, interleaving and channelizing.). Block ENC has blocks for uplink and downlink supporting confidentiality processes of WCDMA.

Audio/voice block 1170 supports audio and voice functions and interfacing. Applications interface block 1180 couples the digital baseband 1110 to an applications processor 1400. Also, a serial interface in block 1180 interfaces from parallel digital busses on chip 1100 to USB (Universal Serial Bus) of a PC (personal computer) 1050. Circuitry 1190 is for GPS (Global Positioning System). USIM (UMTS Subscriber Identity Module) 1195 or other SIM provides for user insertion of an identifying plastic card, or for sensing biometric information to identify the user and activate features.

In FIG. 2, a mixed-signal integrated circuit 1200 includes an analog baseband (ABB) block 1210 for GSM/GPRS/EDGE/UMTS/WCDMA/HSDPA which includes SPI (Serial Port Interface), digital-to-analog/analog-to-digital conversion DAC/ADC block, and RF (radio frequency) Control pertaining to GSM/GPRS/EDGE/UMTS and coupled to RF (GSM etc.) chip 1300 with its respective SPI (Serial Port Interface), digital-to-analog conversion DAC/ADC block, and RF Control pertaining to WCDMA and coupled to RF (WCDMA) chip 1300.

An audio block 1220 has audio I/O (input/output) circuits to a speaker 1222, a microphone 1224, and headphones (not shown). Audio block 1220 is coupled to a voice codec and a stereo DAC (digital to analog converter), which in turn have the signal path coupled to the baseband block 1210 with suitable encryption/decryption activated or not.

A control interface 1230 has a primary host interface (I/F) and a secondary host interface to DBB-related integrated circuit 1100 of FIG. 2 for the respective GSM and WCDMA paths. The integrated circuit 1200 is also interfaced to an I2C port of applications processor chip 1400 of FIG. 2. Control interface 1230 is also coupled via access arbitration circuitry to the interfaces in circuits 1250 and the baseband 1210. Buck voltage conversion circuitry for DC-to-DC conversion, and low-dropout (LDO) voltage regulators are for power management/sleep mode of parts of the chip. Power conversion block 1240 couples to a power control state machine. Circuits 1250 include a RTC real time clock (time/date functions), general purpose I/O, a vibrator drive (supplement to cell phone ringing features), and a USB On-The-Go (OTG) transceiver. A touch screen interface 1260 is coupled to a touch screen XY 1266 off-chip. Battery 1280 power and battery data go to circuit 1250. Battery Charge Controller in analog circuit 1250 includes MADC (Monitoring ADC).

In FIG. 2 an RF integrated circuit 1300 includes a GSM/GPRS/EDGE/UMTS/CDMA RF transmitter block 1310 supported by oscillator circuitry with off-chip crystal (not shown). Transmitter block 1310 is fed by baseband block 1210 of chip 1200. Transmitter block 1310 drives a dual band RF power amplifier (PA) 1330. On-chip voltage regulators maintain appropriate voltage under conditions of varying power usage. Off-chip switchplexer 1350 couples wireless antenna and switch circuitry to both the transmit portion 1310, 1330 and the receive portion next described. Switchplexer 1350 is coupled via band-pass filters 1360 to receiving LNAs (low noise amplifiers) for 850/900MHz, 1800MHz, 1900MHz and other frequency bands as appropriate. Depending on the band in use, the output of LNAs couples to GSM/GPRS/EDGE/UMTS/CDMA demodulator 1370 to produce the I/Q or other outputs thereof (in-phase, quadrature) to the GSM/GPRS/EDGE/UMTS/CDMA baseband block 1210.

Chip (or core) 1400 has interface circuit 1410 including a high-speed WLAN 802.11a/b/g interface coupled to a WLAN chip 1500. An applications processing section 1420 includes a RISC processor (MIPS core, ARM processor, etc.), a digital signal processor (DSP), and a shared memory controller MEM CTRL with DMA (direct memory access), and a 2D (two-dimensional display) graphic accelerator. The RISC processor and the DSP have access via an on-chip extended memory interface (EMIF/CF) to DDR (double data rate) DRAM, and flash memory. A shared memory controller in circuitry 1420 interfaces RISC processor and the DSP via an on-chip bus to on-chip memory 1440 with RAM and ROM. A 2D graphic accelerator couples to frame buffer internal SRAM. A security block 1450 includes secure hardware accelerators for encryption and decryption.

On-chip peripherals and additional interfaces 1410 include UART data interface and MCSI (Multi-Channel Serial Interface) voice wireless interface for an off-chip IEEE 802.15 ("Bluetooth"), piconet and personal network communications) wireless circuit 1430, debug messaging and serial interfacing. A JTAG emulation interface couples to an off-chip emulator Debugger for test and debug. I2C interfaces to analog baseband ABB chip 1200, and to applications interface 1180 of integrated circuit chip 1100 having digital baseband DBB. Interface 1410 includes a MCSI voice interface, a UART interface for controls, and a multi-channel buffered serial port (McBSP) for data. Timers, interrupt controller, and RTC (real time clock) circuitry are provided in chip 1400, and MicroWire (u-wire 4 channel serial port) and multi-channel buffered serial port (McBSP) to off-chip Audio codec, a touch-screen controller, and audio amplifier 1480 to stereo speakers. External audio content and touch screen (in/out) and LCD (liquid crystal display) are suitably provided. USB OTG interface couples to off-chip Host and Client devices outside handset 1010 to/from PC 1050 (personal computer) to update the handset 1010. An on-chip UART/IrDA (infrared data) interface in interfaces 1410 couples to off-chip GPS (global positioning system) and Fast IrDA infrared. EMT9 and Camera interfacing go to one or more off-chip still cameras or video cameras 1490, and/or to a CMOS sensor of radiant energy. Such cameras and other apparatus all have additional processing performed with greater speed and efficiency in the cameras and apparatus and in mobile devices coupled to them with improvements as described herein. LCD controller and associated PWL (Pulse-Width Light) block in interfaces 1410 couple to color LCD display and its LCD light controller off-chip. Interfaces 1410 include off-chip keypad and GPIO (general purpose input/output), and On-chip LPG (LED Pulse Generator); PWT (Pulse-Width Tone) interfaces for off-chip LED and buzzer peripherals; and on-chip MMC/SD multimedia and flash interfaces for off-chip MMC Flash card, SD flash card and SDIO peripherals.

In FIG. 2, a WLAN integrated circuit 1500 includes MAC (media access controller) 1510, PHY (physical layer) 1520 and AFE (analog front end) 1530 for use in various WLAN and UMA (Unlicensed Mobile Access) modem applications. PHY 1520 includes blocks for BARKER coding, CCK, and OFDM. AFE 1530 is coupled by receive (Rx), transmit (Tx) and CONTROL lines to WLAN RF circuitry 1540. RF 1540 includes a 2.4 GHz (and/or 5GHz) direct conversion transceiver and power amplifer and low noise amplifier LNA in the receive path. Bandpass filtering couples RF 1540 to a WLAN antenna. In MAC 1510, Security circuitry supports WEP (Wired Equivalent Privacy), RC4, TKIP, CKIP, WPA, AES (advanced encryption standard), 802.11i and/or others. An embedded CPU is connected to internal RAM and ROM and coupled to provide QoS (Quality of Service) IEEE 802.11e operations WME, WSM, and PCF (packet control function). A security block has busing for data in, data out, and controls interconnected with the CPU. Interface hardware and internal RAM in WLAN 1500 couples the CPU with interface 1410 of applications processor integrated circuit 1400. Wireless interfaces for IEEE 802.16 "WiMAX" mesh networking and other standards are coupled to applications processor integrated circuit 1400 and other processors in the system.

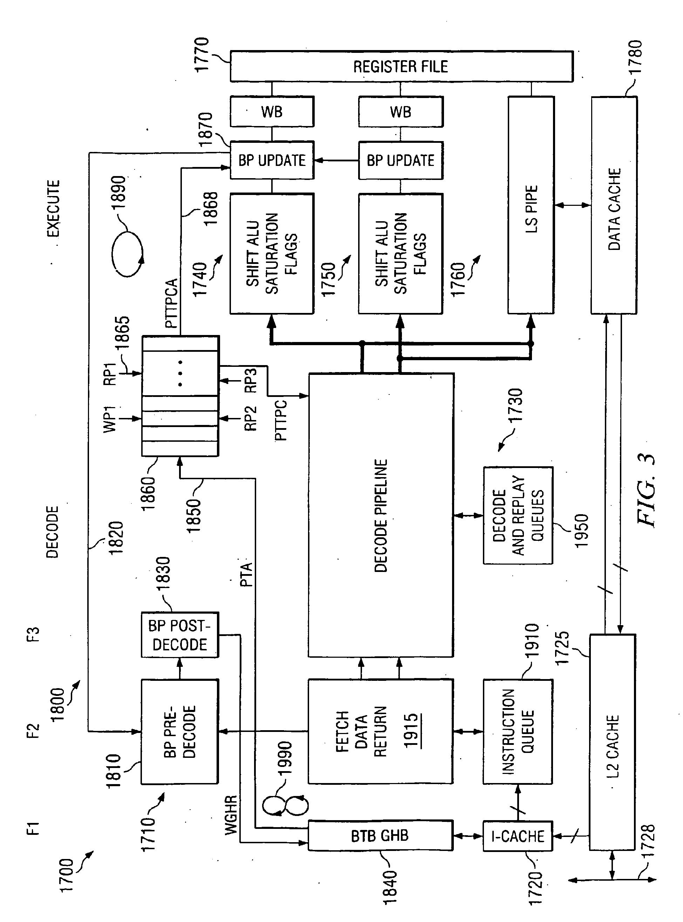

In FIG. 3, microprocessor 1700 has a fetch pipe 1710 obtaining instructions from level one (L1) instruction cache (Icache) 1720 and a level two (L2) instruction and data cache 1725 coupled to a system bus 1728. Fetched instructions from the fetch pipe 1710 are passed to an instruction decode pipe 1730 that aligns, decodes, schedules and issues instructions at appropriate times defined by clock cycles Zero, one or two or more instructions are issued in any given clock cycle. Instruction decode Pipe 1730 in this embodiment issues an instruction 10 to a first execute pipe Pipe0 1740, and may issue a second instruction I1 to a second execute pipe Pipe 1 1750. Instructions are suitably also issued to a Load-Store (LS) pipeline 1760. Pipe0 1740, Pipe1 1750 and LS pipeline 1760 write results to a register file 1770. Features include in-order execution with an Execute unit having two execute pipelines. At least one program counter PC suitably keeps track of the instructions. Decode pipe 1730 issues instructions to the LS pipe 1760 for load and/or store operations on a data cache 1780 for either unified memory or memory specifically reserved for data. Data cache 1780 is bidirectionally coupled to the L2 cache 1725.

Fetch pipeline 1710 has improved special branch prediction (BP) circuitry 1800 that includes a remarkable fine-grained branch prediction (BP) decoder including a BP Pre-Decode section 1810 coupled by a special message bus 1820 providing branch resolution feedback from the improved execute pipelines 1740 and 1750. BP Pre-Decode section 1810 supplies pre-decoded branch information to a BP Post-Decode section 1830 in at least one succeeding hidden pipestage F3.

BP Post-Decode Section 1830 supplies highly accurate speculative branch history wGHR bits to a hybrid branch prediction unit 1840 including a Global History Buffer (GHB) to supply highly accurate Taken/Not-Taken branch predictions. Hybrid branch prediction unit 1840 also includes a Branch Target Buffer (BTB) to supply predicted Taken branch addresses PTA to a special low power pointer-based FIFO unit 1860 having pointers 1865. Low power pointer-based FIFO unit 1860 supplies predicted taken target PC addresses PTTPCA on a bus 1868 as a feed-forward mechanism to branch resolution (BP Update) circuitry 1870 in Pipeline 1740 and PTTPC to address calculation circuitry 1880 in decode pipeline 1730. BP Update circuits in each of Pipelines 1740 and 1750 are coupled to each other and to the feedback message-passing bus 1820 for branch resolution purposes.

In FIG. 3, in this way, a remarkable branch prediction feedback loop 1890 is completed to include units and lines 1810, 1830, 1840, 1850, 1860, 1868, 1870, 1820. Fine-grained decoding 1810, 1830 excites branch prediction 1840 that feeds-forward information to BP Update circuitry 1870 which then swiftly feeds-back branch resolution information to even further improve the supply of wGHR bits from block 1830 to branch prediction 1840.

Branch prediction block 1840 is coupled to instruction cache Icache 1720 where a predicted Target Address TA is used for reading the Icache 1730 to obtain a next cache line having candidate instructions for the instruction stream. The Icache 1730 supplies candidate instructions to an Instruction Queue (IQ) 1910 and also to BP Pre-Decode 1810. A Fetch Data Return block 1915 also couples instructions from Icache 1720 to BP Pre-Decode 1810, and couples instructions from Instruction Queue 1910 to the beginning of the decode pipeline 1730.

Decode pipeline 1730 aligns instructions, which can carry over from one cache line to another, decodes the instructions, and schedules and issues these instructions to pipelines 1740, 1750, 1760. A decode and replay queues block 1950 is coupled to the decode pipeline 1730 to handle cache misses, pipeline flushes, interrupt and exception handling and such other exceptional circumstances as are appropriately handled there. In each of the pipelines Pipe0 1740 and Pipe1 1750, circuitry and operations are provided for shifting, ALU (arithmetic and logic), saturation and flags generation. Writeback WB is coupled to Register File 1770. Multiply-accumulate MAC stages are also suitably provided in some embodiments for providing additional digital signal processing and other functionality. LS pipeline 1760 performs address generation and load-store operations.

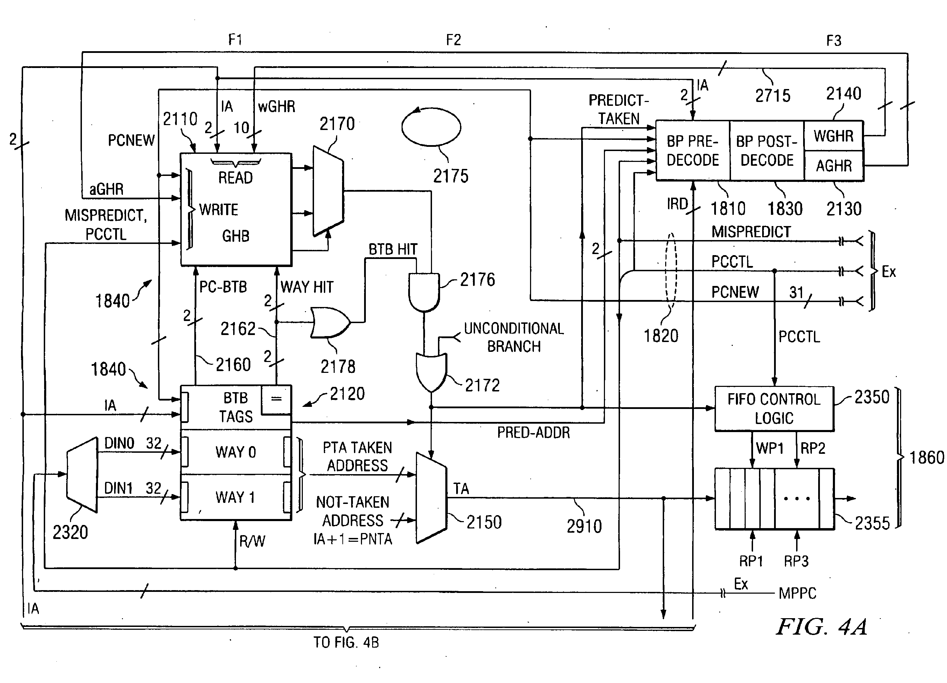

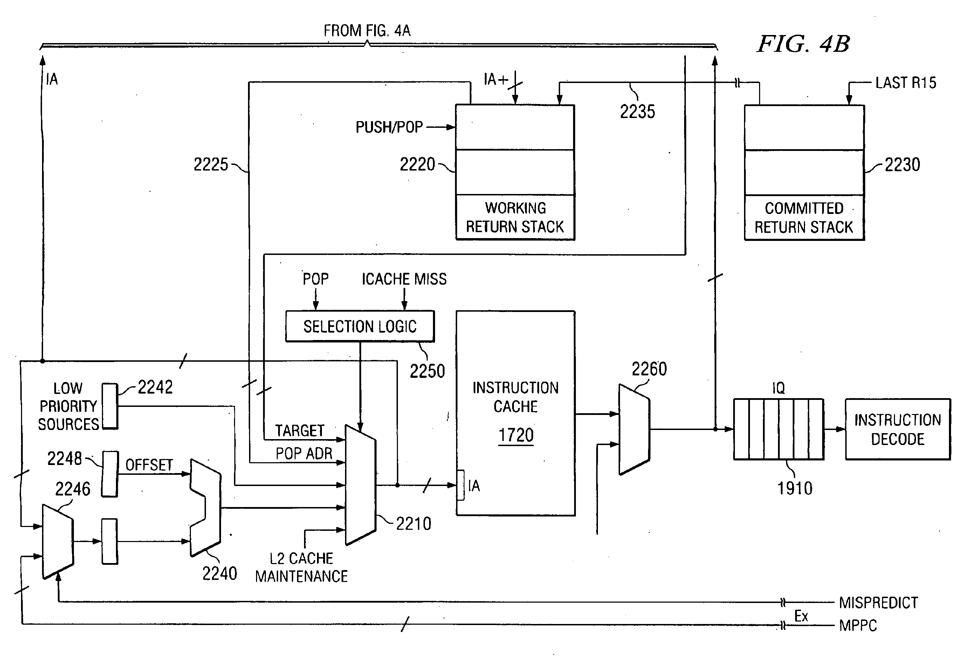

FIG. 4A shows a detail of particular FIG. 3 blocks and interconnections for Pre-Decode 1810, Post-Decode 1830, and block 1840 with a Global History Buffer GHB 2110 and a Branch Target Buffer BTB 2120. FIG. 4B shows Instruction Cache Icache 1720 and associated circuitry interconnected with the circuitry of FIG. 4A.

The branch history pattern is maintained in two versions-first, an actual branch history of Taken or Not-Taken branches determined from actual execution of each branch instruction in an execution pipestage far down the pipeline. This actual branch history is maintained in what is called herein an architectural global history register aGHR 2130 and updated by fast message-passing on lines 1820 from the execution pipestage 1870. Second, a predicted, or speculative, branch history pattern has some actual branch history concatenated with bits of predicted branch history. This predicted branch history pattern is maintained in what is called herein a working global history register wGHR 2140.

These two branch history patterns are kept coherent in case of a mis-prediction. Advantageously, message-passing lines 1820 act as a bus that links or feeds back the actual branch history information, determined far down the pipeline in an execution pipestage such as 1870 of FIG. 3, to the circuitry 1810, 1830 that is operating up front in the fetch pipeline. This improvement saves power and facilitates the fine-grained full cache-line branch prediction advantages next described.

The branch prediction decode logic 1810, 1830 not only detects a branch somewhere on the cache line, but also advantageously provides additional decode logic to identify precisely where every branch instruction on a cache line is found and how many branch instructions there are. Thus, when multiple branch instructions occur on the same cache line, the information to access the GHB 2110 is now made far more precise. The mosaic of branch histories are no longer confused and accumulated in the process by which branch predictions are used to access the GHB 2110. A tight figure-eight shaped BP feedback loop 1990 in FIG. 3 couples units 1810, 1830, 1840, 1720, 1810. In this way speed paths are avoided and branch prediction accuracy is further increased.

The process of loading the GHB 2110 with branch predictions learned from actual branch history speedily message-passed from the execution pipe also progressively improves the branch predictions then subsequently accessed from the GHB 2110. The additional decode logic (e.g., Post-Decode 1830) takes time to operate, but that is not a problem because at least some embodiments herein additionally run the additional decode logic as an addition to an existing pipestage and when needed, across at least one clock boundary in parallel with one or more subsequent pipestage(s) such as a first decode pipestage. This hides the additional decode logic in the sense that the number of pipeline stages is not increased, i.e. the pipeline of the processor as a whole is not increased in length. For example Post-Decode 1830 amounts to an additional fetch pipestage(s) parallelized with the initial pipestage(s) of the decode pipeline.

Notice that a record of actual branch history in aGHR 2130 is constructed by message-passing on bus 1820 to a fetch stage from the architecturally unfolding branch events detected down in the execute pipe such as at stage 1870. The aGHR 2130 is maintained close to or in the same fetch pipestage as the speculative GHR (or working GHR) wGHR 2140. The actual branch history is thus conveyed to a fetch stage up front in the pipe quickly from an execute pipestage 1870 farther down in the pipeline. In this way, on a branch prediction, the improved circuitry 1810, 1820, 1830 eliminates power consumption and clock cycles involved in staging the predicted branch history wGHR down to the branch execute pipestage. Precise branch instruction decoding herein increases prediction rates and performance relative to an imprecise branch decode.

Systems features and applications software and hardware execute faster, and more features and applications as well are suitably introduced to run concurrently on the same system. Even where the cache line is no wider than one instruction, power is saved and performance is improved by message-passing from an execution pipestage to the fetch unit up front to resolve predicted and actual branches.

By pipelining the precise fine-grained decode process, speedpaths are reduced by allowing multiple cycles (e.g., two) for performing the instruction fetch data branch detection decode required for the wGHR 2140 speculative or predicted branch history update. The complexity of the logic required to keep both aGHR 2130 and wGHR 2140 in synchronism on mis-prediction is greatly reduced.

In FIG. 4A, part of the decode Pre-Decode 1810 is done in F2 pipestage, and the bulk of the decode is done in Post-Decode 1830 in the hidden F3 pipestage. Fetch pipestage F3 is parallelized with a first decode pipestage. The rest of the instruction fetch unit thereby advantageously supplies the instruction stream.

In FIG. 4A, a two-cycle branch prediction loop has a branch target buffer (BTB 2120) and a global branch history buffer (GHB 2110). The BTB 2120 has contents given by TABLE 1 and is implemented as cache array with tag compare and fetching of a predicted taken target address PTA. The GHB 2110 is an array that is read by an index comprising speculative branch history bits supplied by wGHR 2140. In FIG. 4B, the target address TA from branch prediction in FIG. 4A is coupled to the instruction cache 1720.

In FIG. 4A, the BTB 2120 and GHB 2110 are supplied with MSB and LSB Instruction Address IA lines respectively. BTB 2120 cache array associatively retrieves and supplies a Predicted Taken Address PTA and supplies it to a Mux 2150. Concurrently with retrieval of the PTA, BTB 2120 outputs branch prediction relevant information on a set of lines 2160 coupled to the GHB 2110 to facilitate operations of the GHB 2110. Lines 2160 include two way-hit lines 2162, and lines for PC-BTB[2:1] from each of Way0 and Way1.

Mux 2170 supplies a global branch prediction direction bit of Taken or Not-Taken at the output of Mux 2170. An OR-gate 2172 couples the global prediction Taken/Not-Taken as a selector control PREDICTTAKEN to a Mux 2150. Mux 2150 selects a corresponding Target Address as a Predicted Taken Address PTA if the prediction is Taken, or a Predicted Not-Taken Address (sequential, incremented IA+1) PNTA at output of Mux 2150 if the prediction output PREDICTTAKEN from OR-gate 2172 is Not-Taken. OR-gate 2172 also supplies a PREDICTTAKEN output to BP Pre-Decode block 1810 to complete a loop 2175 of blocks 1810, 1830, wGHR 2140, GHB 2110 and logic via OR-gate 2172 back to block 1810. If the branch instruction is an unconditional branch, a BTB 2120 output line for an Unconditional Branch bit in a retrieved entry from BTB 2120 is fed to OR-gate 2172 to force a predicted Taken output from the OR-gate 2172. OR-gate 2172 has a second input fed by an AND-gate 2176. AND-gate 2176 has a first input fed by the output of Mux 2170 with the global prediction of GHB 2110. AND-gate 2176 has a second input fed by an OR-gate 2178. OR-gate 2178 has two inputs respectively coupled to the two Way Hit lines 2162. If there is a way hit in either Way 0 or Way 1 of BTB 2120, then the output of OR-gate 2178 is active and qualifies AND gate 2176. The Taken or Not-Taken prediction from GHB output Mux 2170 passes via AND-gate 2176 and OR-gate 2172 as the signal PREDICTTAKEN to block 1810. If there is a BTB miss (signal BTBHIT low), meaning no valid predicted branch instruction in BTB 2120, then PREDICTTAKEN output from AND-gate 2176 is kept inactive even though the Taken/Not-Taken output from Mux 2170 is active. Second, the BTB 2120 keeps track of the branch type, so that with an unconditional branch, the prediction is taken (PREDICTTAKEN is active from OR-gate 2172) regardless of the GHB 2110 Taken/Not-Taken prediction.

**TABLE 1: BRANCH TARGET BUFFER ENTRY CONTENTS**

| Contents | Description |
|---|---|
| Target | Predicted Target Address PTA to use in fetching Target Instruction from Instr. Cache |
| Tag | Tag to compare against, includes PC-BTB |
| Target Mode | Instruction set ISA of the target instruction |
| Page Cross | Whether branch and target instruction are not in same memory page |
| Unconditional | Ignore prediction from GHB 2110 |
| Branch Type | Direct, Call, Return |
| Valid | BTB entry is valid |

In FIG. 4A, the BTB 2120 is a content addressable array accessed by instruction fetch virtual addresses IA. These addresses designated "IA" are the current instruction address value that points to the current instruction for fetch purposes. BTB 2120 has two Ways having one tag per Way. Each tag has the same MSBs as the other tag if both Ways hold an entry. The MSBs of an address IA match the MSBs of the one or two tags when a BTB hit is said to occur. The LSBs of the tags may not match the address IA, and those LSBs provide important instruction position information on the cache line called PC-BTB herein. Thus, the two ways associatively store entries of TABLE 1 for as many as two respective Taken-branch instructions situated on the same cache line.

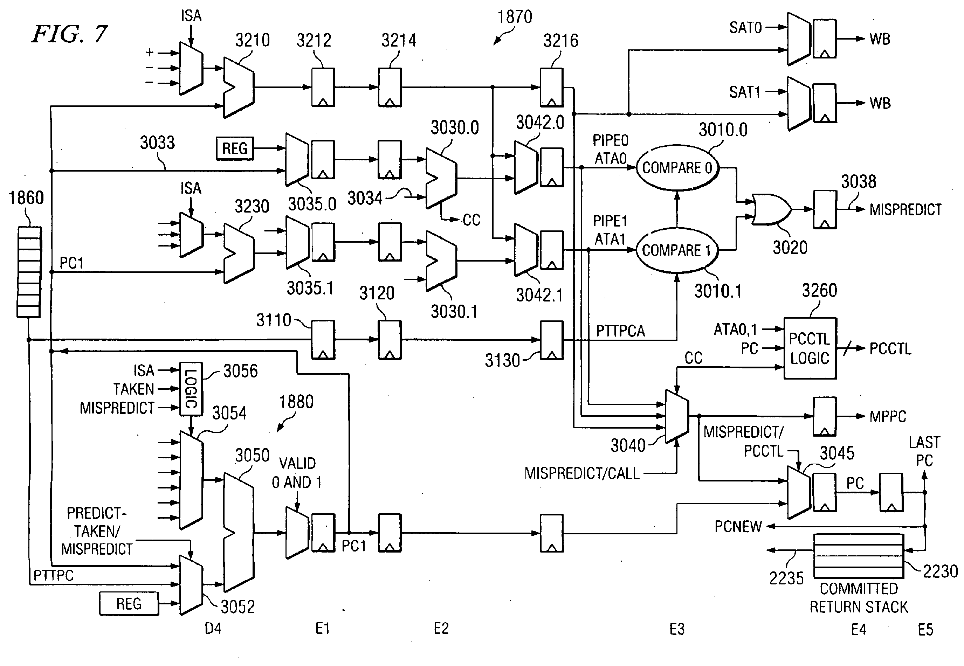

Some branch related terms used herein are as follows. IA: Instruction Address used for I-Cache read. IA+1: Predicted Not-Taken, next cache line address to fetch in program order. IA[2:1]: Initial Position of entering onto a cache line. Lower addresses than IA[2:1] on the cache line are ignored, if any. PC: Program Counter of Executed Instruction. PC holds the address of the instruction that is executed and committed to the machine state. PCNEW: Contents of PC passed back to fetch stage. IRD: Cache line of Instructions that are concurrently read out of I-Cache. (IRD is not an address. IRD is instructions.). BT: Branch Target, an instruction to execute next after a branch instruction when the branch operation represented by the branch instruction is Taken. PC-BTB: Tag address in BTB has LSBs pointing to a position of a Taken branch instruction on a cache line. Instruction Address IA MSBs identify address of the cache line itself. Branch: Any data move to the PC as contrasted with simply sequencing the PC to the next instruction in program order sequentially. BTB: Branch Target Buffer, cache of Predicted-Taken Addresses (PTAs) accessed associatively by Instruction Address IA MSBs. BTB accesses PC-BTB, PTA, and Unconditional and Type information. MPPC: Mis-Predicted PC Address. Actual target address sent from execution stage back to instruction fetch stage for updating BTB entry. ATA: Actual Target Address determined by actual execution of a branch instruction when actually taken. MISPREDICT: Mis-prediction Signal has four categories: 1) target mismatch of predicted taken address from FIFO with actual target address ATA from actual branch execution in execute unit. 2) Branch is taken but predicted not-taken or not predicted at all. 3) Branch is not taken (no target to compare), but was predicted taken. 4) Some other synchronization events are suitably handled as if they were mis-predictions. PREDADDR: Predicted Position of a Taken Branch instruction on a cache line. If no branch exists nor is predicted taken on the cache line, then PREDADDR defaults to the end position ("I1"). PREDADDR is related to PC-BTB. PTTPC: Predicted Taken Target PC address from FIFO for PC1 calculation in FIG. 7. PTTPCA: Predicted Taken Target PC Address from FIFO for target mismatch comparison purposes in execute unit; time-delayed version of PTTPC. TA: Target Address--either PTA or PNTA--output of Mux 2150. PTA: Predicted-Taken Address content of BTB Muxed out by Mux 2150 when the GHB supplies a Predicted Taken prediction. PTA can be used for I-Cache read to fetch Branch Target. PTA has MSBs identifying a cache line and LSBs identifying position of the Branch Target on the cache line. PNTA: Predicted-Not-Taken Address IA+1 muxed out by Mux 2150 when the GHB supplies a Predicted Not-Taken prediction. PNTA increments IA for I-Cache read to fetch next cache line in program order. PNTA has position LSBs set to "00." Predicted Taken: value of bit from GHB representing a prediction that a branch instruction just fetched will, when executed several clock cycles later in an execute pipestage, load the PC with an address that is NOT the next address in program order; used to operate Mux 2150. Predicted Not-Taken: value of bit from GHB representing a prediction that a branch instruction just fetched will, when executed several clock cycles later in an execute pipestage, load the PC with an address that IS the next address in program order. The Predicted Not-Taken value is the logical complement of Predicted Taken value. GHB: Global History Buffer array of prediction direction/strength bit values Predicted Taken and Predicted Not-Taken arranged by GHB addresses (indexes) each representing a different branch history series of bits.

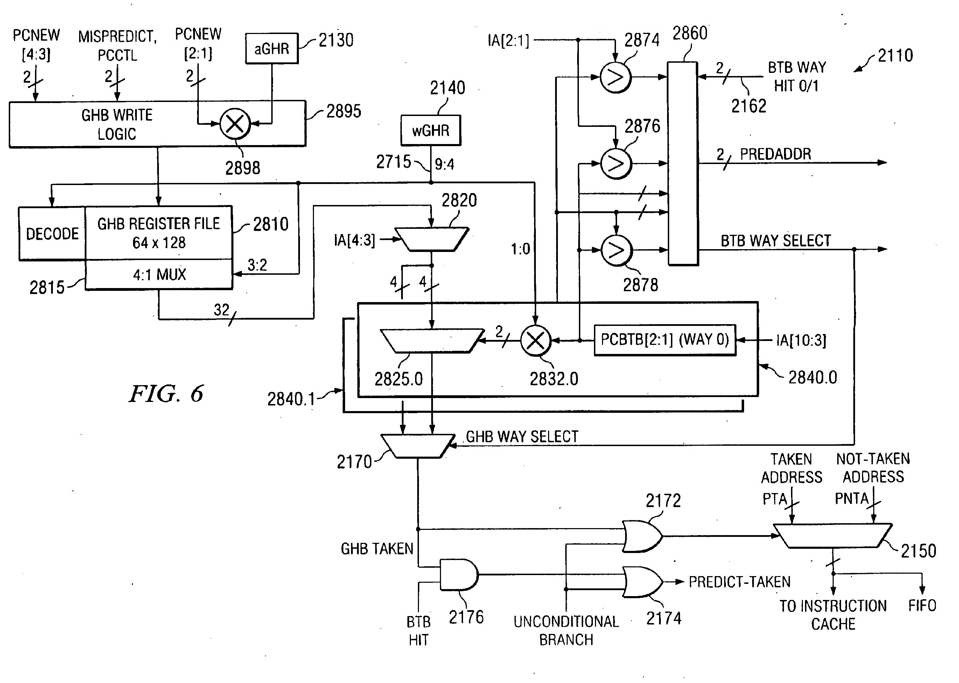

In FIG. 4A and FIG. 6, if a BTB hit occurs, FIFO 1860 is updated with a Predicted Taken Address PTA value retrieved on BTB hit. This Predicted Taken Address is sent by Mux 2150 to update the Instruction Address IA via a Mux 2210 of FIG. 4B. IA is coupled to an address input of Instruction Cache 1720 to retrieve the cache line holding the Branch Target instruction to which the PTA points. This Branch Target instruction is fed from Instruction Cache 1720 as the next instruction into the Instruction Queue 1910 of FIG. 3 and FIG 4B.

In FIG. 4A and FIG. 6 if no BTB hit occurs, there is no Predicted Taken Address and the GHB 2110 PREDT/NT output is zero at the selector input of Mux 2150. The Instruction Address IA value is incremented by one ("IA+1"). This value is called a Predicted Not-Taken Address PNTA and is muxed out of Mux 2150 to update the Instruction Address IA via Mux 2210 coupled to address input of Instruction Cache to retrieve the next cache line in program order to which the Predicted Not-Taken Address points.

In FIGS. 4A and 6, GHB 2110 has a two-bit saturation counter that increments a pertinent GHB two-bit entry on an actual executed taken branch and decrements the GHB entry on an actual executed non-taken branch. For a correctly predicted branch, only the LSB (least significant bit or strength bit) of the counter is incremented. This effectively saturates the count value. On a mis-prediction, the MSB (most significant bit or direction bit) is flipped only if the strength bit is zero (0) at that time. Thus, the counter effectively increments or decrements the count based on taken or non-taken mis-prediction. The counter ranges over +1, +0, -0, -1 as it were. If no mis-prediction is detected in actual execution, and the strength bit in GHB is not already one at the location indexed, the strength is incremented (High). If a MISPREDICT signal is generated by actual execution, then an entry based on the saturating counter operation described hereinabove is written into GHB 2110 of FIG. 4A by GHB write circuitry 2895 of FIG. 6 at the location identified by the latest ten bits of aGHR actual branch history. Also, the branch target address MPPC from execution stage is written to BTB 2120 and associated therein with the corresponding PC value (fed back as PCNEW) of the branch instruction actually executed.

In FIGS. 3, 4B and 7, an execution pipestage has a Branch Resolution logic circuitry 1870 which supplies branch-taken information to a Committed Return Stack 2230. Stack 2230 is coupled via a message-passing bus 2235 back to a Speculative Working Return Stack 2220. Stack 2220 supplies a Pop Address on line 2225 to the POP ADR input of Mux 2210. In FIG. 4B, the Working Return Stack 2220 is a speculative push/pop stack in fetch. When a CALL instruction is detected, the next sequential instruction address IA is pushed on the stack. When a RETURN instruction is detected, the top of stack 2220 is popped as the predicted target address POP ADR. The Committed Return Stack 2230 is operative on retiring of a CALL or RETURN instruction. On a branch mis-prediction, the Committed Return Stack 2230 is copied to the Working Return Stack 2220.

In FIG. 4B, Instruction Cache Icache 1720 has an input for the latest Instruction Address IA asserted to Icache 1720 to obtain a new cache line. Instruction Address IA is supplied by a Mux 2210. Mux 2210 has inputs from 1) Target output of Mux 2150 of FIG. 4A to handle predicted branches, 2) Pop Address POP ADR from Working Return Stack WRS 2220 to handle Return instructions, 3) output from an Offset Adder 2240, 4) addresses supplied by L2 Cache 1725 of FIG. 3 for cache maintenance, and 5) addresses from low priority sources 2242. Offset Adder 2240 has a first input fed by a Mux-flop 2246. Mux-flop 2246 has a first input coupled to the output of Mux 2210. That output of Mux 2210 can thereby have any appropriate offset applied to it. Mux-flop 2246 has a second input fed by lines MPPC supplying a branch target address generated by actual execution of a branch instruction in the execute pipeline. Occasionally, such actual branch target address was mis-predicted by the branch prediction circuitry. In such case of a mis-prediction detected in BP Update unit 1870 of FIG. 3, the branch target address generated by actual execution is fed back on the lines MPPC from pipe stage 1870 of FIG. 3.

Mux-flop 2246 has a selector control fed by MISPREDICT line from BP update 1870 of FIG. 3. If the MISPREDICT line is active, then Mux-flop 2246 couples the actual branch target address on the lines MPPC to Offset Adder 2240. Otherwise if the MISPREDICT line is inactive, then the Mux-flop 2246 couples the Mux 2210 output to Offset Adder 2240 for offsetting. Offset Adder 2240 has a second input provided with a selected one of several ISA instruction-set-dependent offset values 2248 of zero or plus or minus predetermined numbers. Offset Adder 2240 supplies the appropriately-offset address to an input of Mux 2210. Mux 2210 has its selector controls provided by a selection logic 2250. Selection logic 2250 is responsive to inputs such as POP indicating that the Working Return Stack 2220 should be popped to the Icache 1720, and to another input ICacheMiss indicating that there has been a miss in the Icache 1720. Selection logic 2250 is provided with all input needed for it to appropriately operate Mux 2210 supply Icache 1720 with addresses in response to the various relevant conditions of the processor architecture.

Icache 1720 feeds an instruction width manipulation Mux 2260 which supplies output to the Instruction Queue 1910 and the decode pipeline thereafter.

In FIGS. 4B and 4A, Mux 2210 supplies as output the Instruction Address IA that ordinarily is used to read the BTB 2120 to supply a Predicted Taken Address PTA (if any) of the instruction having the instruction Address IA. The BTB has a R/W write input coupled to the MISPREDICT line from execute stage 1870. If the MISPREDICT line is active, then for write purposes the BTB 2120 has a BTB entry written with the mis-predicted branch target address fed on lines MPPC via a data input Mux 2320 to the BTB 2120 in a Way and at a tag established by the Instruction Address PCNEW associatively stored with entry MPPC.

In FIG. 4A, FIFO 1860 has a FIFO control logic 2350 and a register file 2355 of storage elements, and is fed with target addresses TA from Mux 2150. The FIFO control logic 2350 is fed with monitor inputs including the Taken/Not-Taken prediction from OR-gate 2172. In this way FIFO control logic 2350 only updates a storage element in register file 2355 of low-power pointer-based FIFO 1860 when there is a predicted Taken output active from OR-gate 2172. Thus register file 2355 of pointer-based FIFO 1860 only holds Predicted Taken Addresses PTA from Mux 2150, and a write pointer WP1 of FIFO 1860 is only incremented upon receipt of a PTA (or before receipt of another PTA), rather than responding to a PNTA from Mux 2150.

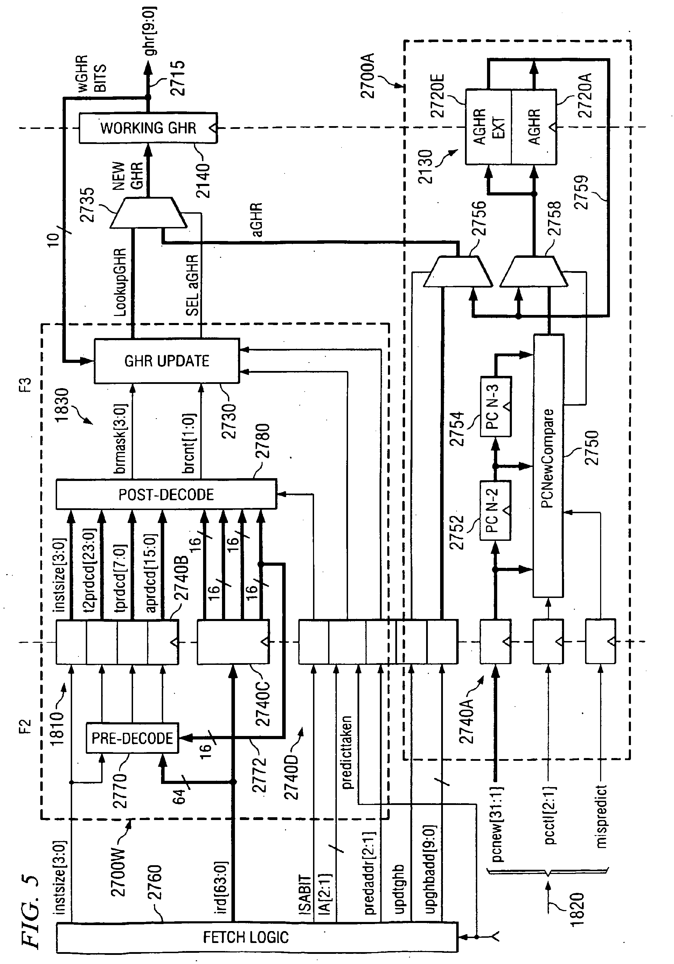

In FIG. 5, the PCNEW value and certain signals MISPREDICT and PCCTL[2:1] are received at fetch via lines 1820 from the execute pipestage signifying the actual behavior of the branch. The message passing circuitry from FIG. 7 clocks PCNEW the execute PC (instruction address of the executing instruction) into the global history aGHR circuitry 2700A of FIG. 5. In the meantime, fine-grained decode circuitry of FIG. 5 is keeping track of the entire cache line.

In FIG. 5, logic blocks 1810, 1830 share two sections-a Working History section 2700W and an Actual History section 2700A.

Physically hiding the "F3" pipeline stage from the architecture confers an additional clock cycle to complete the fine-grained decoding, which in turn confers a better prediction accuracy on the improved architecture. In one embodiment, for purposes of this precise decoding, a minority part of the real estate and decode operations is allocated to an F2 pipestage and the majority thereof is allocated to an F3 pipestage situated time-wise in parallel with an early part of decode pipeline 1730. For each executed branch instruction, the information, designated PCCTL, that an execution pipestage 1870 sends back to Fetch is a first bit 1) branch or no branch as determined by logic in execute unit detecting either an actually decoded branch or something other than a simple increment of PC by any instruction; and a second bit 2) if a branch, whether the branch is actually Taken or actually Not-Taken, reflecting a condition code CC event when there is a branch based on ALU or other logic in the execute unit.

In FIG. 5, the Actual History 2700A clocks PCNEW into flip-flops 2740 and uses a comparator PCNEWCOMPARE 2750. The PCNewCompare block 2750 monitors LSB (less significant bits) of the address to detect when an instruction straddles and thus has crossed the cache line boundary of 64-bits width. This means that the instruction address of the instruction at hand is not changed. PCNewCompare 2750 looks for discontinuities in the program counter stream by comparing 1) a current PC (designated PC N-1 clocked into flops 2740 from lines PCNEW in bus 1820) with 2) the staged versions of the PC (PC N-2 2752 and PC N-3 2754) resulting from the in-order issue.

In FIG. 5, the wGHR 2140 keeps track of the speculative branch history pattern, and uses the pattern to index into the GHB 2110 circuitry of FIG. 6 to obtain a Taken/Not-Taken prediction from GHB 2110 of what the next branch is predicted to be. By contrast, aGHR 2130 tracks actual executed Taken/Not-Taken branch behavior of branches executed in the execute pipestage(s). Note that the contents of aGHR 2130 provide a window on behavior of a predetermined number (e.g. ten) of most-recently actually executed branches, but that behavior is numerous clock cycles down the pipeline and thus lagging very much behind in time relative to the current information that is needed. The wGHR 2140 is therefore provided to predict branch behavior. In case of MISPREDICT active, the Actual History circuitry 2700A couples and copies the aGHR 2130 to wGHR 2140 via 10-bit lines 2759 via Mux 2756 and thence via Mux 2735 to wGHR 2140. Elsewhere, the processor flushes the pipelines, and execution restarts from what is known to be the actual behavior of the instruction stream in aGHR 2130.

A multiplexer 2758 has two 10-bit inputs for a) the current contents of aGHR 2130 on a line 2759 and b) an output from PCNEWCOMPARE compare logic 2750.

When an instruction crosses a cache line, the PCNEW does not change from one cycle to the next, so compare logic 2750 detects an equality. In such case, the aGHR is fed back to itself via the Mux 2758. Multiplexer 2758 has an output coupled to the aGHR portions 2720A and 2720E. Multiplexer 2758 thereby either updates aGHR 2130 with new results of comparison block 2750, or if block 2750 detects there is no update needed, then Mux 2758 is controlled by block 2750 to simply enter the previous contents of aGHR 2130 from line 2759 back into aGHR 2130.

The aGHR 2130 has a shift register Extension section 2720E to include earlier branch history and thus more bits than are used in wGHR 2140. In case of a replay (such as triggered by a data cache miss) or a pipeline flush event, bits including the bits of shift register Extension section 2720E are used to reinstate the bits representing an earlier branch history pattern. The bits are reinstated by Mux 2758 by loading them into the main aGHR section 2720A. Operations thereby resume at the earlier point in the history in an advantageous and uncomplicated manner.

In FIG. 5, the Working History section 2700W accomplishes the precise branch prediction that improves branch prediction accuracy by means of more complete branch instruction decoding, and the hidden pipestage F3. The Pre-Decode 1810 and Post-Decode 1830 in Working History section 2700W provide an additional decode circuit having respective circuit portions 2770, 2780 respectively situated for fetch purposes time-wise in parallel with a fetch stage and a decode pipeline stage. In the FIG. 5 embodiment, the additional decode circuit 1810, 1830 is responsive to the cache line IRD to generate at least one set of bits of a branch count BRCNT value representing presence of plural branches in the cache line when plural branches occur and at least one different bit of BRCNT value representing presence of a single branch in the cache line.

The actual instruction stream Icache 1720 in Fetch pipeline is coupled from Fetch Logic 2760 to Working History section 2700W to provide a 64-bit cache line IRD. The latest instruction(s) on the cache line IRD are connected directly to and clocked into flip-flops 2740C which have four 16-bit subsections. In this example, Predecoder 2770 utilizes six predecoder logic circuits, two for the first instruction set and four for the second instruction set. Inputs to predecoder 2770 are 64-bit IRD delivering a cache line, 4-bit instruction size INSTSIZE from Fetch pipestage F2, and 16 wrap-around bits on 16-bit line 2772 from the previous cache line stored in flip-flops 2740C. Further in FIG. 5, outputs of Predecoder 2770 are clocked into flip-flops 2740B as 24-bit T2 instruction set predecode (T2PRDCD) responsive to the 16-bit or 32-bit form of instruction in the second instruction set. Also clocked in, are 8-bit "T" instruction set predecode (TPRDCD) responsive to a group of 32-bit of instructions in the second instruction set , and 16-bit "A" instruction set predecode (APRDCD) responsive to 32-bit instructions in the first instruction set. Next, a Postdecode logic block 2780 does a final decode to determine what opcode format and position each branch instruction occupies on the cache line.

Circuitry 2700W of FIG. 5 advantageously decodes the cache line sufficiently to identify precisely which instructions are branch instructions and how many of them are branch instructions found in the cache line.

GHR Update 2730 has an output LookupGHR for updating wGHR 2140. LookupGHR is established as a function of the branch count BRCNT bits according to the following TABLE 2. "T/NT" in the TABLE 2 represents the single-bit one or zero value of the signal PREDICTTAKEN. If no valid branches are detected on the cache line, then wGHR 2140 is not updated regardless of PREDICTTAKEN.

**TABLE 2: UPDATING wGHR 2140**

| BRCNT | LookupGHR (concatenation) |
|---|---|
| 00 | {wGHR[8:0], TINT}; |
| 01 | {wGHR[7:0], 0, T/NT}; |
| 10 | {wGHR[6:0], 00, T/NT}; |
| 11 | {wGHR[5:0], 000, T/NT}; |

In general, IA[2:1] points to the word on the cache line of the current instruction. PREDADDR[2:1] is LSB bits of a tag address, if any, having MSB bits defined by the address of the cache line, wherein the BTB reports a hit (presence) of a predicted-Taken branch at a position on the cache line as further identified by those LSB bits. The circuitry 2780, 2730 can predict more than one branch at a time, but not all branches on a cache line may even be reached in actual execution. In that case, BRCNT is a smaller number than binary 11 (decimal 3).

In a case where there is more than one valid branch on the cache line and PREDICTTAKEN is a one (taken), the circuitry thus operates to identify the position of the branch instruction which is regarded as Taken as that position to which PREDADDR[2:1] points because that is the position represented by the tag in BTB where a hit occurs and because in this embodiment BTB is a cache having tags representing addresses of branch instructions that have been actually Taken. If IA[2:1] were 00 and PREDADDR were 00, then BRCNT would not be 11, but 00 instead. In the example of four branches on the cache line, PREDADDR is 11 when BRCNT is 11. Any branch(es) between the IA[2:1] position on the cache line and the PREDADDR[2:1] position on the cache line are presumed Not-Taken because a hit or entry for them has not just occurred or been found in the BTB. That is a reason why the insertion bit zeroes are inserted in the concatenation by GHR Update 2730 according to TABLE 2.

An important result of the operations in FIGS. 4A and 5 involves fetching the right cache line on the next clock cycle. That fetch depends on PREDICTTAKEN predicting whether or not there is any branch on the cache line which will be Taken, and PREDADDR[2:1] identifying by position which of possibly plural branches on the cache line will be Taken. Identifying that position matters because different branches will probably have respective taken-branch target addresses that point to respective different new cache lines any of which might be the right cache line to fetch next. Accordingly, knowing from GHB 2110 whether any branch on the cache line is predicted taken, and knowing further from PREDADDR the position of that the target address of that branch, can be used to bring in the correct next cache line IRD from Icache 1720 on the next cycle.

In this example of a two-way BTB 2120, the BTB can have up to two Taken branches at different BTB tag LSBs corresponding to the same MSB of that tag representing the address of the cache line itself. And in FIG. 6, in such a case, the lower numbered address position of the two is used for purposes of PREDADDR[2:1] because sequential execution will most likely reach the branch instruction having that lower numbered address and then that branch instruction being predicted-Taken will most likely actually be Taken in actual execution and change the instruction stream to a different path bypassing the higher-numbered instruction. That is a reason why the policy of using lower numbered address position is used in the embodiment of FIG. 6, not only for operating the GHB Mux 2170 but also the BTB internal selection of the right PTA from either of two Ways of BTB. GHR Update 2730 uses PREDADDR to update wGHR 2140 and thereby access GHB 2110 to provide a new PREDICTTAKEN for use in processing cache line IRD on the next cycle. Concurrently, BTB 2120 uses PREDADDR to identify the right way PTA to output via Mux 2150 for accessing Icache 1720 to supply cache line IRD on that next cycle.

When one or more branches are present on the cache line, the GHR Update 2730 loads nine, eight, seven or six previously-most-recent bits from wGHR (where wGHR bit number zero is the previously most-recent bit), concatenated with further newer bits: none, one, two or three zeroes (called insertion bits herein), and one prediction bit. That prediction bit becomes the newest wGHR[0] bit.

In this way, branch decoding detects branches on a cache line, and modifies the wGHR pattern with different numbers of insertion bits dependent on, or as a function like BRCNT of, the number of detected branches, ordinarily ignoring when PREDICTTAKEN=1 (Taken) any branches on the cache line having an address subsequent to a predicted address PREDADDR[2:1] and prior to Instruction Address IA[2:1] as fed to GHR Update 2730. (Some special cases handled in TABLES 5-9 may vary. See TABLE 7 for instance, when PREDICTTAKEN=0 (Not-Taken)).

The number of detected branches less those ignored is the number of what are herein called valid branches for purposes of GHR Update 2730. This hashing improvement advantageously adds insertion bits, such as a variable number of zeroes or otherwise, ahead of PredictTaken in wGHR depending on number of valid branches in the cache line. This approach avoids confusing the branch history with other histories that involve actual Non-Taken branches (GHR zeroes). Only the non-taken branches within the cache line are included as zeroes by the operations of this example of GHRUpdate 2730. The non-taken branches are part of the pre-decoding 2770 and post-decoding 2780/2730 for updating wGHR 2140. The non-taken branches from the starting instruction until the taken branch instruction of this cache line are added as insertion zeroes to the wGHR by this circuitry 2730.

In this cache line, if there is another branch (not found in BTB) before a predicted taken branch, then such other branch is presumed to be a non-taken branch to be entered as an insertion zero "0" in the wGHR. Accordingly, entering the variable number of zeroes elegantly builds into the speculative branch history the non-taken predictions for branches detected on the cache line ignoring any branches before the Instruction Address[2:1] position on the cache line and further ignoring any branches positioned on the cache line after the position PREDADDR of a predicted-taken branch on the cache line. In other words, when PREDICTTAKEN=1 (Taken), the valid instructions for purposes of generating the branch mask BRMASK and branch count BRCNT are from IA (starting address - this can be 00 for sequential instruction or any address for a target address) to PREDADDR (branch address of the predicted taken branch), such that any branch prior to IA and after PREDADDR on the cache line is ignored.

GHR Update Logic block 2730 supplies a 10-bit updated set of GHR bits Lookup GHR as well as control output SELaGHR to Mux 2735. SELaGHR control to Mux 2735 couples GHR Update 2730 output LookupGHR to wGHR 2140 unless MISPREDICT is active and there is no Load-Store exception. Mux 2735 has two 10-bit inputs, a first input connected to GHR Update block 2730, and a second input connected to the output of Mux 2756 of Actual History section 2700A. The 10-bit GHR update selection made by Mux 2735 is clocked into the wGHR 2140 unless there is no reason to change the contents ofwGHR 2140. A predetermined number of most recent bits (e.g., all ten bits) in wGHR 2140 is output on a bus 2715 to circuitry of FIG. 6, as well as fed back to Global History Register Update logic circuit 2730.

Postdecode 2780 provides a 4-bit branch mask output BRMASK, and a 2 bit output branch count BRCNT, both supplied to GHR Update block 2730. When a branch instruction wraps from a first cache line to a second, wGHR is updated for that branch instruction when the second cache line is processed by GHR Update 2730. The circuit can count branch instructions of different lengths in the cache line, not counting a branch instruction that wraps around to a succeeding cache line, and not counting any branch instruction on the cache line that has an address less than a current address IA [2:1].

4-bit BRMASK identifies which 16-bit portions of the cache line have a valid branch instruction therein. For example, "1001" signifies that the first and last 16-bit portions of the cache line respectively have a branch instruction therein, but the middle two 16-bit portions of the cache line respectively lack any branch instruction. 2-bit BRCNT is a code that in this example is a coding equal to the binary count of branches in BRMASK less one. For example, one branch in BRMASK has a branch count BRCNT of 00, two ones in BRMASK has BRCNT = 01, etc., and four ones in BRMASK has BRCNT of 11.

Next, various examples of entries in BRMASK are provided. When BRMASK is [0000], no valid branch instructions exist on the cache line and wGHR 2140 is maintained unchanged. Note that the legends "BRMASK" and "BRCNT" do not limit the function of either set of lines to be a mask or a count. A particular coding scheme is described next. For instance, "1101" for the BRMASK bits in this example of TABLE 4 signifies there is a branch that starts at word 0, word 2 and word 3. A "1" in BRMASK indicates the start (or highest word number of address) of a branch instruction. This could be a 32 bit or 16 bit branch in this example. The upper word ("32/2") of a 32 bit branch is indicated with a one in BRMASK.

An instruction is represented as valid or significant for GHR Update 2730 branch history update purposes in the following way. Two 2-bit fields determine the valid range of instructions-IA[2:1] (Instruction Valid Address word position) and PREDADDR[2:1]. IA[2:1] selects or identifies the current valid instruction word position in a cache line. PREDADDR determines or identifies the position of a predicted-Taken branch instruction if any in the cache line. The tag in the BTB has two more LSB bits of precision beyond the fewer number of address bits (e.g., IA[10:3]) used to access the BTB. The address bits IA used for access and the two more LSB bits of precision comprise part or all of the known address of a branch instruction that was actually Taken at some previous time. Both that known address of the earlier-Taken branch instruction, and the target address to which that branch instruction actually branched are associatively stored in the BTB. PREDADDR[2:1] is based on those two more LSB bits of precision. When the BTB is accessed using the fewer number of address bits, the additional two more bits of precision in the address are thereby retrieved along with the associatively stored target address PTA. The BTB in this example has two ways, Way0 and Way1, and there may be such Taken branch information in neither, either, or both, Way0 and Way1.

The PC-BTB address from each Way of the BTB is selected by the same index or tag IA[10:3]. The PC-BTB address is read out along with the unconditional branch field, target address, and branch type. They are all qualified by their respective way hit signal.

PC-BTB for way0 and way1, as thus qualified, are inputs to logic that generates PREDADDR by selecting the PC-BTB with the lower address if both ways hit. When both ways hit, the lower address is used because the branch instruction at the corresponding lower address on the cache line will most likely be taken and the branch instruction at the higher address on the cache line will not be reached on this pass. But if there is no hit in the BTB (sequential execution), PREDADDR then defaults to 11 by qualifying logic responsive to way0-hit and way1-hit both inactive. The default to 11 is provided on the good assumption that all branches on the current cache line will not be taken (in view of no BTB hit) so PREDADDR "11" opens up the masking process that produces BRCNT to count any and all branches on the cache line starting with the position IA[2:1].

If three or four branches on the cache line have actually been Taken in their history, GHB 2110 will have Taken at different indexes (BTB tag LSBs) to distinguish between the various branches. If BTB has four ways, then BTB has capacity for up to four targets (as many targets as ways) that can be stored to correspond. In the example of FIG. 4A wherein BTB has two ways and entries occupy both ways currently at the same tag, the BTB control circuitry operates according to any suitable entry replacement policy or procedure such as randomly selecting (or updating least-recently used or other alternatives) as between the ways to determine the BTB way wherein to replace the entry in the BTB at that tag with the latest taken mispredicted branch address information.

The instructions at word positions between PREDADDR and IA[2:1]]) inclusive are regarded as valid or significant (when PREDADDR[2:1] is larger than IA[2:1] and PREDICTTAKEN=1). The use of the predicted address word bit-pair PREDADDR is now further described. Two lines from the BTB 2120 tag unit of FIG. 4A are coupled to Working History circuitry 2700W of FIG. 5. These two lines carry the bits that identify which one of four words on the targeted instruction cache line holds the Taken branch recognized in the BTB

The hardware and process of Post-Decode 2780 and GHR Update 2730 are further described with reference to a truth table or procedure for updating wGHR based on PREDICTTAKEN, IA[2:1], and PREDADDR and other information as shown next.

Branch Count BRCNT is a function of the value of branch mask BRMASK. GHRSHIFT is a "shift" enable for wGHR 2140 in the sense of enabling loading of LookupGHR into wGHR 2140. The shift is usually enabled if BRMASK represents at least one valid branch on the cache line. The shift logic has some preconditions based on valid fetch from Icache 1720, no pipe flush, and no cancellation of last write. The cache line branches are represented by ones, if any, in a four-bit representation BRMASK of words on the cache line. The pseudocode for BRMASK lays out the ones for branches from the various instruction sets on the 4-bit representation and applies various masks such as to mask out invalid branches.

```
        BRMASK = ( ( [ { Abranch[1], 0, Abranch[0], 0} OR
                (ISA16branch[3:0] AND NOT MASKISA16[3:0]) OR
                (ISA32branch[3:0]) ] AND ISIZEMASK[3:0] ) OR
 BTBwayMASK[3:0] )
                AND {FETCHMASK[3:1], 1}.
```

Abranph[1:0] a 1 indicates a 32-bit branch instruction from an instruction set architecture (ISA) designated "A" is detected in that half of the cache line. ISA16branch[3:0] a 1 indicates a 16 bit branch inst. from another ISA "T" is detected in that halfword. ISA32branch[3:0] a I indicates a 16 or 32 bit branch inst. from another ISA is detected in that halfword. FETCHMASK is a delayed version of IRDsize (delayed 1 clock). In other words, if only part of the instruction cache line is valid, then FETCHMASK masks out the invalid balance of the cache line. A MASKISA16 4-bit mask for BRMASK generation purposes. Dash "-" indicates a Don't Care. Truth table TABLE 3 establishes the valid portion of the cache line for branch prediction purposes in generating BRMASK. That valid portion is represented by bits IRDsize as a function of PREDADDR, IA[2:1], and whether there is a predicted taken branch (PREDICTTAKEN active or not).

**TABLE 3: IRD SIZE**

| |
|---|
| PREDICTTAKEN |
| \| PREDADDR |
| \| \| IA[2:1] |
| \| \| \| IRDsize |
| \| \| \| \| |
| 0 -- 11 000 |
| 0 -- 10 001 |
| 0 -- 01 011 |
| 0 -- 00 111 |
| 1 11 11 000 |
| 1 11 10 001 |
| 1 11 01 011 |
| 1 11 00 111 |
| 1 10 10 000 |
| 1 10 01 001 |
| 1 10 00 011 |
| 1 0101 000 |
| 10 00 001 |
| 1 00 00 000 |
| default: |
| 1 -0 11 --- |
| 1 00 -1 --- |
| 1 0- 1- --- |

Notice that when PREDICTTAKEN=0 (Not-Taken), then PREDADDR is ignored. In such case, branches on the cache line starting with IA[2:1] are predicted Non-Taken for wGHR update purposes in this embodiment, notwithstanding that one or more of those branches may have been Taken at some time as signified by way hit in BTB and PREDADDR.

An Instruction Size Mask generates ISIZEMASK[3:0] from cache line information about 16-bit instructions (ISIZE bit=0) and 32-bit instructions (ISIZE bit=1) for purposes of generating BRMASK described elsewhere herein. If ISIZE bit 3 is a one (1), then the cache line holds only a lower 16-bit portion of a 32-bit instruction, which is then rendered zero (0) as not counted as a branch in bit 3 of ISIZEMASK. To generate ISIZEMASK, each bit of ISIZE is inverted, except don't-cares ("-") are rendered as ones (1) in the mask.

A BTBwayxMASK is generated respective to each Way x of BTB 2120. BTBwayxMASK masks for each Way are then ORed to produce BTBwayMASK. BTBwayMASK is used in generating BRMASK as described elsewhere herein. For each Way x, BTBwayxMASK is a function of Instruction Address IA[2:1], the BTB-PC[2:1] of the branch target from the Way x, and conditioned on a Tag Hit (Way Hit) active in that Way x. If there is no Tag Hit active, the BTBwayxMASK for Way x is an zeroes. The operation is analogous to FIG. 6 comparators 2874 and 2876 for comparing cache line positions for current instruction position IA[2:1] and, for each Way, the BTB-PC [2:1] position of Taken Branch instruction on the cache line.

For initializing on power up or soft reset:
wGHR-- 0 (all zeroes meaning "Not-Taken")
aGHR-- 0 (all zeroes meaning "Not-Taken")
GHB -- set all two-bit entries to "00" (Not-Taken direction, Low strength) state.

Initialize BTB 2120 valid bits to all zeroes (invalid).

Pipeline Flush: No initialization of GHB 2110.
1) Flush the pipeline.
2) In FIGS. 4A and 5, copy the aGHR 2130 to the wGHR 2140. This transfers information about actual branch behavior to the working global history register.
3) In FIG. 4A and FIG. 6, update the GHB 2110 (Global History Buffer) entry according to incrementing/decrementing the two-bit GHB saturation counter with correct actual Taken or Not-Taken behavior just encountered in the execution pipe and which necessitated the pipeline flush because of mis-prediction.
4) In FIG. 4A, update the BTB 2120 (Branch Target Buffer) with the also-corrected target address to which the branch now goes in the case of an actual Taken branch.

UPDTGHB controls the selection of Mux 2756. Update Global History Buffer Additional UPGHBADD (ten lines) is supplied to a respective part flip-flops 2740D and thence to one of the pair of 10-bit inputs of Mux 2756. UPDTGHB and UPGHBADD initialize the wGHR 2140 on power-up and soft reset.

In FIG. 6, Global History Buffer circuitry 2110 maintains a global, or comprehensive, history of the Taken/Not-Taken behavior of the processor indexed or addressed for write input by the actual history aGHR in FIGS. 4A and 6. This actual history is read-accessed by the speculative (working) history of branches provided by the wGHR 2140 of FIG. 5. In this way, wGHR 2140 feeds back addresses or indexes into the Global History Buffer circuitry 2110 for GHB read earlier in the Fetch pipe of FIGS. 3 and 4A to produce a Taken/Not-Taken prediction retrieved from the global entries.

In FIG. 6, GHB 2110 has a GHB register file 2810 that has a write port and a read port. The write port is updated by GHB Write Logic 2895 while each new branch prediction is read out of GHB register file 2810 read port. Upon an instance of MISPREDICT active, GHB Write Logic 2895 writes the strength bit and sometimes the direction bit in at the address (index) supplied by aGHR 2130. Thus, the two-bit GHB entry at the given GHB storage address (index) is updated according to a procedure as described elsewhere herein. In the process, GHB write logic 2895 writes the two-bit entry to a GHB storage address (index) specified by a concatenation of aGHR[9:2] with PCNEW[4:3] and a hash (XOR) 2898 of the most recent two aGHR[1:0] bits with two PCNEW LSB bits PCNEW[2:1]. (This write hash corresponds to analogous hashing on GHB read by XOR 2832.i.) The two bits 4 and 3 of the PCNEW address (PCNEW[4:3]) of the branch instruction in execution are provided as concatenation bits as just described for the write address to GHB register file 2810. Also, when MISPREDICT is not active but a branch instruction is executed in FIG. 7, the strength bit is updated in the two-bit entry at the given GHB storage address (index) according to the update procedure as described elsewhere herein. In FIG. 6, GHB register file 2810 is index accessed or read-addressed by 10-bit wGHR output line 2715 from FIG. 5. Six most-significant bits (MSB) of line 2715 are decoded to access 64:1 the GHB register file 2810, followed by a 4:1 Mux 2815 controlled by the next two less-significant bits of line 2715, followed by a 4:1 Mux 2820 under control of Instruction Address (IA) bits [4:3]. Then follows a 4:1 Mux 2825.0 (and 2825.1) under control of a hash provided by XOR 2832.0 (or 2832.1) of the two least-significant bits (LSBs) on line 2715 with PC-BTB tag LSB bits [2:1] from BTB Way0 (or Way1). In FIG. 6, note that there are two sets of branch prediction circuitry 2840.0 and 2840.1 called GHB Way0 and GHB Way1 herein. For brevity, the internals of circuitry 2840.0 is described, it being understood that the corresponding parts of circuitry 2840.1 have decimal .1 appended instead of .0. The decimals correspond to the BTB 2120 Way 0 or Way 1 from which the PC-BTB[2:1] values come to the GHB Way circuits 2840.1 and 2840.1 respectively. In branch prediction circuitry 2840.0 note that four-bit upper and lower halves of the 8 bits from Mux 2820 are supplied respectively to 4:1 Mux 2825.0 in circuitry 2840.0 and 4:1 Mux 2825.1 in circuitry 2840.1. XOR 2832.0 provides a 2-line output to control 4:1 Mux 2825.0 and analogous XOR 2832.1 controls 4:1 Mux 2825.1. A single line output from each Mux 2825.0 and 2825.1 is fed to a corresponding first input and second input of the 2:1 output Mux 2170.

The GHB Way Select control signal for Mux 2170 is generated by a logic circuit 2860. Logic circuit 2860 has inputs for two BTBWayHit lines, and three greater-than comparators 2874, 2876, and 2878. Comparators 2874 and 2876 each have a first input respectively connected to Instruction Address bits IA[2:1]. Comparators 2874 and 2876 each have a second input respectively connected to PC-BTB bits [2:1] for each of BTB Way0 and Way1. Comparator 2878 has first and second inputs respectively connected to those PC-BTB bits [2:1] for Way0 and Way1. Logic circuit 2860 advantageously responds to the comparators 2874, 2876, 2878 to operate the selector control of Mux 2170 so that the prediction selection is logically takes account of Way Hit signals on lines Way Hit lines 2162 and the position of each Taken-branch registered in BTB relative to each other and to the current instruction position IA [2:1] on the cache line.

With two Ways the BTB generates two hit/miss outputs, one for Way0 and one for Way1. This raises the possibility that both Ways could hit. The illustrated embodiment adopts the policy of selecting the lower addressed Way hit rather than the higher addressed Way hit, provided the PC-BTB[2:1] tag address values from each BTB Way array are within range of (greater than) the fetch starting address which is indicated by IA[2:1]. Note that both Way values of PC-BTB[2:1] are compared against IA[2:1], and then the two Way values are compared against each other. This comparison process is also used to select the predicted target address PTA from up to two possibilities stored in the BTB Ways. GHBTAKEN = direction of the GHB prediction, 1 = Taken, 0 = Not-Taken (T/NT) (subject to not-Unconditional qualifier and BTBHIT qualifier in FIG. 4A logic.)
1) If no BTB Ways hit, then BTBHIT = 0. GHBTAKEN is don't care. Logic 2176, 2172 overrides GHBTAKEN. Set PREDADDR="11" to point to end of cache line.
2) If both BTB Ways hit and both Muxes 2825 report Taken, then BTBHIT = 1 and set GHBTAKEN = 1, except see Note 1. Set PREDADDR to PC-BTB[2:1] address position located immediately after the IA[2:1] value.
3) If both BTB Ways hit and both Muxes 2825 report Not-Taken, then BTBHIT = 1 and GHBTAKEN = 0. Set PREDADDR=11. In case of unconditional branch, the GHB prediction is overridden and PREDICTTAKEN = 1.
4) If both BTB Ways hit and Muxes 2825 report opposite Taken/Not-Taken, generate GHB Way Select control signal to Mux 2170 to select the reported T/NT from the Way Mux 2825.0 or 2825.1 with its PC-BTB[2:1] address position located immediately after the IA[2:1] value (closest to the fetch starting address). Set PREDADDR to that PC-BTB [2:1] address immediately after IA [2:1] value. Then BTBHIT = 1 and assign GHBTAKEN to the value output by that selected Way Mux 2825.0 or 2825.1, except see Note 1.
5) If only one BTB Way hits, then BTBHIT = 1. Set GHB Way Select to that Way to assign GHBTAKEN to value from corresponding Way Mux 2825.0 or 2825.1. Set PREDADDR to PC-BTB [2:1] for that Way. Except see Note 1 re that sole PC-BTB[2:1] value.

Note 1: In FIGS. 4A and 6, if both PC-BTB[2:1] addresses represent tag address positions on the cache line before the position represented by the IA[2:1] value, then GHBTAKEN is set equal to zero (Not-Taken). Set PREDADDR to = "11" to point to end of cache line. In FIG. 5, wGHR is updated with a number of leading zeroes equal to the number of branches on the cache line starting with IA[2:1] value and thereafter to end of cache line.

In FIGS. 3, 4A, and 7, branch target FIFO 1860 is situated just ahead of the execution unit, the branch is executed in the execution unit, and the branch resolution is then performed. As the branch is predicted as Taken (PREDICTTAKEN=1) in FIG. 4A in the fetch unit of the pipeline, the branch Target Address TA=PTA from mux 2150 is sent directly to and latched into pointer-based FIFO 1860. Because FIFO 1860 is pointer based, the branch Target Address does not move in most or all clock cycles. Pointers are updated instead of moving addresses. For purposes of branch target address communication, intermediate pipeline stages are bypassed. Advantageously, power dissipation and real estate in the improved and simplified structure is reduced and saved, either entirely or for addition of other functions and features. The branch target FIFO 1860 is a register file structure with pointers for reading and writing addresses. The pointers increment (or decrement alternatively) and wrap around as appropriate after each read or write operation of the FIFO 1860. A speculative write pointer WP1 increments on every taken branch address issued from Mux 2150 in the fetch unit. An architectural read pointer RP1 increments in execution pipestage in response to FIG. 7 comparator(s) 3010 for each actual taken branch except in case of replay, mis-prediction, and abort. In FIG. 7, predicted-Taken target address PTTPC identified by the architectural read pointer RP1 is used in a decode pipestage for Program Counter PC1 calculation and that predicted target address is coupled to the target address comparator 3010 as a Predicted Taken Target PC Address PTTPCA in execution pipestage. Advantageously, pointer operations save power because each PTA value input to the FIFO 1860 from Mux 2150 of FIG. 4A remains stationary as long as it is in the FIFO 1860. With this structure, the clock is only enabled for a single entry in the FIFO 1860 queue for writing data. The output data is read from static multiplex logic. An advantageously small amount of clock power is expended for updating the pointers such as WP1 and RP 1.

For four (4) pipeline stages with single read and write pointers to 32-bit registers, the clock power is estimated to be about 36/128 (9/32 = .28) or about 28% of the clock power that would be utilized for shifting registers. The power (36 units) of the pointer-based FIFO approach herein is ratioed to a divisor equal to the read power (128 units) of a dynamic logic FIFO. Here, a static Mux is used because the power dissipation through the static Mux is generally less than for dynamic Mux.

Another embodiment of the FIFO 1860 suitably has two read operations and read pointers RP1, RP2: one in an early pipeline stage of execution or decode for program counter (PC) calculation, and one later in the pipeline in the execute pipestage that performs the branch target calculation and comparison with the predicted Target Address PTTPCA. In this and other embodiments, even more than two pointers are suitably provided. For example a replay pointer RP3 tracks writeback operations for replay purposes as described later hereinbelow.

The amount of power saving using the FIFO 1860 improvement increases with increasing numbers of pipeline stages.

Furthermore, the special pointer-based FIFO 1860 uses about one quarter 25% of the real estate for 32-bit registers piping taken branch addresses down the pipeline. In terms of power, the power is estimated to be the 28% above multiplied by 25%, which equals 7%.

Integrated circuit area (real estate) is significantly saved by substantially reducing the routing of buses through different pipestages and units of the pipeline. A single bypass-bus 2910 to FIFO 1860 structure is used in place of many different stages and types of shifting registers, and dispenses with latency (wasted clock cycles) associated with laterally passing down branch predictions through pipestages. The FIFO register file with pointers is used to hold the predicted taken target addresses stationary in the FIFO and to bypass the predicted taken target addresses around a plurality of the pipestages for comparison with actual target addresses generated from the executing of branch instructions.

The FIFO 1860 depth is generally set equal to the highest number of taken-branches that are likely to be in the pipeline at once. "Depth" for this purpose is the number of items of data that can be entered in the queue that the FIFO 1860 represents with its corresponding number of storage elements. The depth of the FIFO 1860 is suitably made to have a number in a range of plus or minus 30% of the sum of the number of execute pipestages in all pipelines to which a branch instruction can be issued. Some embodiments feasibly have FIFO depths outside this range as well. Embodiments within this range are believed to be large enough in depth number to minimize pipeline stalling and small enough in depth number to conserve real estate.

FIFO 1860 holds an address-wide predicted taken branch target address PTA, a 2-bit branch type (Call, Return, Normal), and an ISABIT bit for Instruction Set Architecture (ISA) all from BTB 2120. The FIFO 1860 is initialized at power up, at soft reset, and on every pipeline flush such as at branch mis-prediction. The FIFO 1860 is initialized in one procedure simply by setting the write pointer WP1 equal to the read pointer RP1. Upon pipeline flush, valid bits of the FIFO 1860 are cleared.

In FIG. 4A, when a branch is predicted Taken, a Target Address PTA from BTB 2120 is fed to the Target Address output of Mux 2150 which couples the Target Address to FIFO 1860 and incrementing or changing the FIFO 1860 write pointer WP1 specifically for predicted-Taken branches is sufficient. Then several or many cycles later (assuming a highly pipelined high performance processor), the branch instruction itself reaches an execution pipestage of FIG. 7 that actually generates an actual Target Address ATA of the branch instruction being executed. A comparator 3010.0 or 3010.1 compares the predicted Taken Target PC Address PTTPCA from the FIFO 1860 with the actual Target Address ATA0 or ATA1 generated by that execution pipestage in a pipeline Pipe0 or Pipe1. If the comparison detects a match (equality), the prediction is correct and operations proceed.

An indirect branch instruction has the target address provided from a register or load data from memory. In other words, the register or memory address is identified by the branch instruction and not the target address itself. Since the register data or load data can change, the PTTPCA and ATA are compared in execution. The comparison is performed in an execution pipestage because that saves at least one clock cycle compared to doing the compare in the Fetch unit in a second alternative embodiment that passes the actual Target Address ATA back to the Fetch unit for comparison in Fetch.

In FIG. 7, in cases where one branch is a predicted-Taken branch, OR gate 3020 accommodates respective comparison of PTTPCA by comparators 3010.0 and 3010.1 with ATA for a branch instruction in either pipeline Pipe0 or Pipe1.

For out-of-order architectures, each entry in FIFO 1860 is augmented with a tag. Likewise the FIFO 1860 improves machines that are single issue, dual-issue, and multiple issue for any number of instructions. For example, in a higher performance processor where multiple branches can be executed in the same cycle, more read pointers and read ports are suitably provided to the branch FIFO for reading first and second (and even more) entries of the branch FIFO for predicted taken target addresses pertaining to branch instructions respective to each of a plurality of pipelines to which branch instructions are issued. The FIFO 1860 improvement is applicable to improving a fetch pipe itself, a decode pipe, the datapath execute pipe as above, and a load-store pipe.

Some embodiments directly pass immediate data directly to a destination pipestage instead of staging the immediate data through the pipeline. The immediate data are suitably handled by pointer operations of a pointer-based FIFO according to the teachings herein. Embodiments thus include those in which one or more such pointer-based FIFO circuits store immediate data, store predicted target addresses, store other types of information, or any combination of the foregoing.

In FIG. 7, an actual calculated branch target address ATA is generated by execution pipestage for the branch instruction that had a predicted branch target address entered in the FIFO 1860 many cycles earlier. The process of operation reads the FIFO 1860 at the read pointer RP1. With the comparator 3010, compare the thus read predicted target address PTTPCA for this just-executed branch instruction. Then increment the FIFO 1860 read pointer RP1. If addresses ATA and PTTPCA are identical, the prediction is correct (MISPREDICT=0), otherwise not correct (MISPREDICT=1). FIFO 1860 read pointer RP1 for actual-Taken branch is not affected by entry of new second, third, etc. branch predictions.

Once this FIFO read occurs, the read pointer RP1 for predicted Target Address PTTPCA is now incremented by FIFO Control Logic 2350 of FIG. 4A in response to PCCTL lines from the FIG. 7 execute unit. In this way, when a second predicted-Taken branch instruction arrives in the execution pipestage, then the read circuitry will be ready to read the predicted Target Address PTA that was sent from Fetch unit to FIFO 1860 regarding the second branch instruction. Accordingly, the read pointer RP1 for predicted Target Address PTTPCA continually chases the write pointer WP1 for predicted Target Address PTA around the circular buffer of FIFO 1860. The same write pointer WP1 and read pointer RP1 operations advantageously suffice to handle all the pipelines. In processor architectures that execute two or more branches simultaneously, additional read pointers are added to the FIFO 1860 to accommodate every parallel branch.

Target mismatch is the focus of operation of comparator(s) 3010, and involves the branch going to a different actual Target Address than the predicted Target Address predicted for that branch instruction. An event of Branch actually Taken but mis-predicted Not-Taken is not a case of target mismatch. Accordingly, no predicted-Taken Target Address is entered into the FIFO 1860 and the write pointer WP1 is not incremented. Indeed, advantageously predicted Non-Taken Target Address PNTA of FIG. 4A does not need to be entered into FIFO 1860, since the execute pipestage sends back the branch taken event in PCCTL to the aGHR 2130 of FIG. 4A and FIG. 6. So the predicted not-Taken (PREDICTTAKEN=0) bit for that branch instruction in wGHR 2140 is contrary to the PCCTL actual-Taken, and a mis-prediction is suitably generated in circuitry 1830. Conversely, if the predicted Target Address was generated predicted-Taken (PREDICTTAKEN=0), but the branch is actually Not-Taken some cycles later in the execution pipestage, then there is no need for an address comparison. Instead, the read pointer RP1 is simply incremented by FIFO control logic 2350 in response to PCCTL and the pipeline is flushed. If branch was taken and not predicted at all, then this case either is resolved by target mismatch at comparator 3010 by misreading FIFO at read pointer RP1 or by logic that detects a pointer error wherein RP1 gets ahead of WP1. The pipeline is flushed and FIFO 1860 is reset.

In FIG. 7, the execute unit has logic 3260 for generating PCCTL control information including a first bit representing branch or no-branch as determined by logic in execute unit detecting generally something other than a simple increment of PC for that instruction (or not) such as by comparison of ATA and PC. A second PCCTL bit is activated if a branch exists, to identify a branch actually Taken or actually Not-Taken event. The second PCCTL bit reflects a condition code CC event based on ALU or other logic in the execute unit. ALU 3030 computes actual target address ATA0 to a flop as the sum of current value of an address PC1 on a line 3033 plus an offset value on a line 3034. Alternatively, contents of another register REG are provided to ALU 3030.0 by a Mux 3035 selection of the register REG instead of address PC1. Then comparator 3010.0 compares ATA0 with PTTPCA and if not equal, a mis-predicted branch is signaled on MISPREDICT line 3038. MISPREDICT is coupled back to branch prediction circuitry of FIGS. 4A, 5 and 6. A Condition Code CC from ALU 3030.0 together with MISPREDICT and CALL (Call via FIFO 1860 from BTB TABLE 1) provide selector controls to a Mux 3040. Mux 3040 selects ATA0 or another address source. The output of Mux 3040 supplies the actual target address MPPC to update BTB 2120 in the branch prediction circuitry of FIG. 4A. In this way, actual branch execution produces the information used to update the aGHR 2130 and GHB 2110 of FIG. 4A as well. Similar circuitry, including ALU 3030.1, comparator 3010.1, mux 3035.1, and so on, is provided to support the second pipeline Pipe1.

The Taken-Branch FIFO 1860 is actually automatically read every clock cycle and piped a couple of flops 3110, 3120 down to the comparator, in a first alternative. In such alternative FIG. 7 flops 3110 and 3120 literally represent physical shifting. Pipelining the target address (PTTPC down to supply PTTPCA to the comparator 3010) is suitably clock gated with the valid predicted taken branch instruction. This approach still is advantageous over a conventional pipelining approach. In a second alternative of this embodiment, since reading is by static mux, the data is available every clock cycle. Control logic 2350 does not advance the read pointer unless there is a valid predicted taken branch instruction in execution unit. The second alternative provides control logic 2350 with two read pointers, a first read pointer RP1 in the earlier pipeline stage for PC calculation by Adder 3050 and a second read pointer RP2 in execute stage for address comparison by comparator 3010. This second alternative is even better than the just-described first alternative in terms of power because the Target address PTTPCA is directly accessed by use of read pointer RP2 for comparator 3010. PTTPC and PTTPCA are the same address residing stationary in a same one storage element of FIFO 1860. In this second alternative, FIG. 7 flops 3110 and 3120 are interpreted as figurative representations and not physical structures, and read pointer RP2 handles direct access by comparator 3010 to the register file 2355 of FIFO 1860.

The comparison output of comparator 3010 is conveniently meaningless except on instances of Taken Branch detection in PCCTL. In other words, the comparison is qualified by the occurrence of an actual taken predicted branch instruction. This solves or obviates any problem how to know when to read the FIFO 1860 to get input timely to the comparator since Taken branch detection occurs in a later execution pipestage than FIFO 1860 read occurs. Advantageously, the circuit reads the FIFO 1860 when or even before actual Taken branch detection in the execute pipe occurs.

In this second alternative, FIFO Read Pointer RP2 increments upon occurrence of first Taken branch to get FIFO ready immediately for the second Taken branch. In other words, the first valid predicted taken branch instruction increments the FIFO read pointer RP2. Comparator 3010 advantageously obtains that taken branch predicted address (from FIFO 1860 register location to which RP2 points) on the next cycle and not two cycles of latency later, thus saving time and increasing instruction efficiency.

FIFO 1860 provides still further advantages in embodiments that replay instructions. Data cache 1780 can signal replay of a load/store instruction. Suppose the replay signal is asserted several cycles into the execute pipeline due to cache miss or misalignment. On replay, the load/store instruction and all subsequent instructions in the execute pipeline are then suitably re-sent or reissued from the decode unit 1730. In a further advantageous feature supporting such replay, FIFO 1860 has a third read pointer RP3 herein called an actual or architectural read pointer controlled by logic 2350. Read pointer RP3 is incremented in writeback pipestage of an execute pipeline when an instruction is actually retired. If and when the replay signal is asserted, the control circuit 2350 is responsive to the replay signal to reset the read pointers RP1 and RP2 described hereinabove to equal or point to the same FIFO location as actual read pointer RP3. In this way read pointers RP1 and RP2 are moved back in the instruction stream to a point where these read pointers RP1 and RP2 will do their part in the replay process. The read pointer RP3 is also compared to write pointer WP1 in generating a FIFOFULL signal to instruction fetch circuitry in an unusual case if the FIFO 1860 perchance becomes full.

When no branch is involved, or a branch is predicted Not-Taken and there is no misprediction, then Adder 3050 and its input muxes are controlled to simply increment the value of PC1. No mis-predicted address MPPC is produced when there is no misprediction (MISPREDICT = 0) or MISPREDICT zero invalidates MPPC. Address PC1 is suitably piped down to a Mux 3045 to update PC in ordinary sequential execution.

When a branch is actually Taken and there is no misprediction, then mux 3040 is controlled to select the ATA of the branch (or PTTPCA) and then mux 3045 feeds it to PC in the register file 1770 and feeds it back to fetch as PCNEW of FIGS. 7 and 4A. Adder 3210 offsets the PC1 value when there is a branch in Pipe0, and Adder 3230 offsets address PC1 when there is a branch in Pipe1. For delivering the address MPPC in case of a mis-predicted branch (e.g., MISPREDICT active) because of target mismatch or other mis-prediction type, Mux 3045 delivers the output from Mux 3040 to PC and PCNEW. Also, selector controls operate Mux 3040 and Mux 3042.0 or 1 pertaining the pipeline having the branch instruction involved. If a branch is actually Not-Taken but predicted Taken, then Mux 3040 supplies MPPC equal to incremented PC as received via ALU 3210 and flops 3212, 3214, 3216. Flop 3216 also is suitably used to provide a RETURN address for a Return instruction. Regarding Adder 3050, if a branch is predicted Taken (PREDICTTAKEN active), then Mux 3052 selects PTTPC from FIFO 1860 for input to Adder 3050. If a branch is predicted Not-Taken, then Mux 3052 selects PC1 for input to Adder 3050. If a register is involved in calculating PC1, then Mux 3052 selects a register REG such as from register file 1770. Adder 3050 increments the PC1 value by different amounts depending on how many instructions have just been validly issued, for instance. If a branch is Taken but either predicted Not-Taken or has target mismatch, then the Mux 3042 feeds the output of the ALU 3030 for the pipeline involved as an ATA to Mux 3040. Then Mux 3040 selects the ATA for that pipeline and delivers it to MPPC and to Mux 3045. Then Mux 3045 delivers MPPC to PC and PCNEW. Input to the adder 3050 has an offset selected by Mux 3054 from predetermined multiple values when instructions from different instruction sets have different lengths such as a 16-bit or 32-bit instruction. Logic 3056 is responsive to inputs such as ISA, Taken, and MISPREDICT, to control selections by Mux 3054. A mux 3058 is suitably provided for an additional Adder 3050.1. Mux 3058 is responsive to whether an instruction is validly issued in a particular pipeline or not (VALID 0 and 1).

In FIG. 7, note the PC1 value is updated depending on various combinations of branch conditions, instruction type ISA and so forth. The PC1 value is fed into execute pipelines Pipe0 and Pipe1 as a read operand for branch instructions starting at Adder 3210 or Adder 3230. The predicted target address PTTPC and the value for PC1 in execute stage are used by Adder 3050 in a process which operates to calculate address PC1 for instruction 0 and 1 by means of Adder 3210 and Adder 3230. The instruction length, type, mode, and condition code CC status are also used to calculate the PC value by Adder 3050.

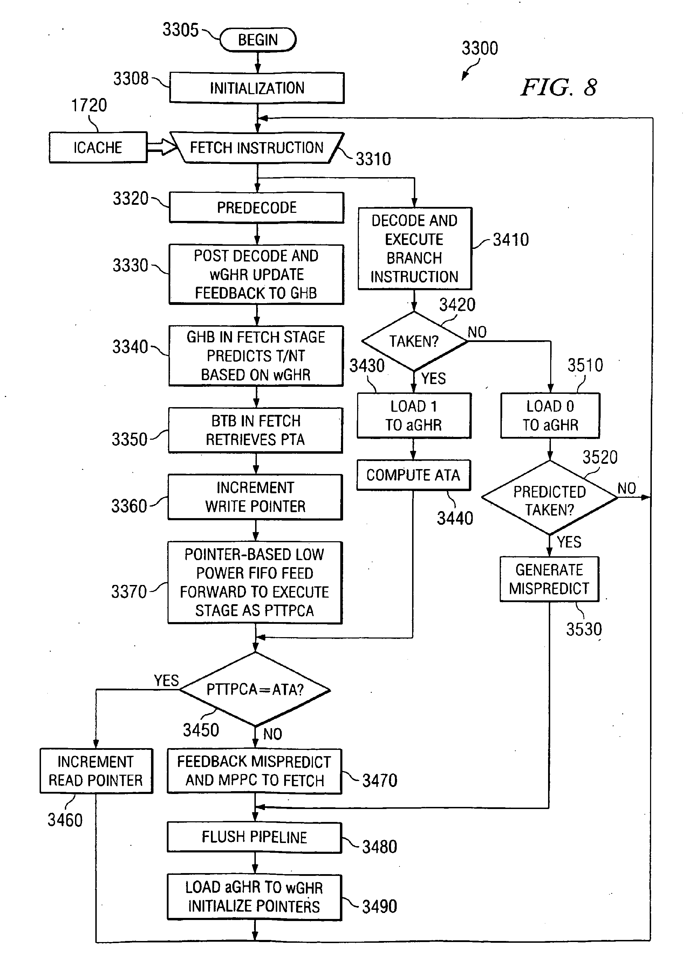

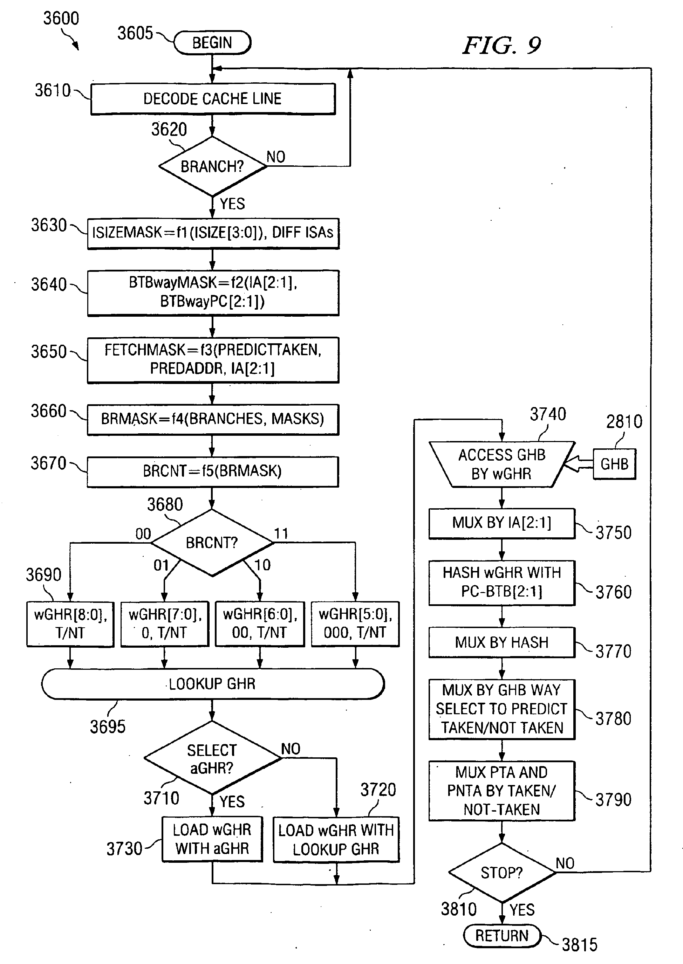

Turning to flow diagrams of FIGS. 8 and 9, the steps that execute instructions as well as steps that perform other operations serially in the flow diagrams are also suitably parallelized and performed for all the source operands and pipestages concurrently. FIGS. 3, 4A, 4B, 5, 6, 7 and other Figures show examples of such parallelization. Thus, pipeline processes advantageously parallelize steps.

In FIG. 8 a branch prediction process 3300 commences with BEGIN 3305 and initialization of aGHR 2130, wGHR 2140, and FIFO 1860 read pointers RP1, RP2, RP3 and write pointer WP1. Step 3310 fetches a cache line from Icache 1720. For branch prediction a Pre-Decode step 3320 begins decoding the cache line to detect branches thereon. A clock cycle thereafter, a Post-Decode step 3330 finishes detecting branch(es) on the cache line and if any branches exist on the cache line, step 3330 updates wGHR working (speculative) branch history with a latest speculative history pattern for at least one such branch. A Global branch prediction 3340 accesses GHB 2110 and retrieves a latest Taken/Not-Taken branch prediction for a branch on the cache line. In step 3350 BTB 2120 retrieves a PTA, if any. If GHB 2110 predicts the branch as Taken, and BTB 2120 has entry for a PTA, then a step 3360 increments write pointer WP1 of FIFO 1860 and enters PTA into FIFO 1860. A step 3370 minimizes power dissipation by pointer-based operation 3360 and by coupling the FIFO 1860 output to bypass some pipeline stages for access by one or more pipeline stages thereafter such as late main decode access of PTTPC at a location in FIFO 1860 identified by Read Pointer RP1 and in the execution unit (FIG. 7) access of Predicted Taken Target PC Address PTTPCA by Read Pointer RP2 and committed read pointer RP3.

In the execution unit, decision step 3450 compares an actual target address ATA from branch instruction execution with PTTPCA. If a match is detected (YES) in step 3450, then operations go to a step 3460 and increment read pointer RP1 of FIFO 1860 and then loop back to fetch 3310. Meanwhile, a step 3410 does main instruction decoding and execution of instructions including one or more branch instructions. In actual execution of a branch, an actual Taken/Not-Taken signal is generated. If the branch is actually Taken, then a decision step 3420 proceeds to a step 3430 to load a Taken (1) bit into Actual History aGHR 2130. Also, a step 3440 computes actual target address ATA in the execution unit. Then ATA is delivered to comparator 3010 for comparison with PTTPCA in decision step 3450 as described herein. A match (YES) is described in the previous paragraph in regard to step 3450. If a match of ATA with PTTPCA is not detected (NO) in step 3450, then operations proceed to a step 3470. Step 3470 directly sends back a MISPREDICT one-bit signal by a message-passing bus 1820 back to aGHR 2130 so that power dissipation is further minimized and to update aGHR 2130. An actual target address ATA instruction address-wide value designated MPPC is also sent back with MISPREDICT to BTB 2120 to update BTB. Because of the mis-predicted branch, a succeeding step 3480 flushes the pipeline, and then a step 3490 loads the aGHR 2130 to wGHR 2140 so that further branch prediction remains coordinated with the actual branching in execution. Step 3490 initializes the pointers of the FIFO 1860. Operations go back to step 3310 to fetch the appropriate cache line from earlier in the instruction stream where the mis-predicted branch was situated, and to resume the process 3300.

If in step 3420, the branch instruction was Not-Taken in execution, then operations go to a step 3510 and load a zero (0) indicative of Not-Taken into the Actual History aGHR 2130. Then a step 3520, determines whether this branch that was actually Not-Taken had been predicted Taken. If the branch had not been predicted Taken, then no mis-prediction occurred, and operations go directly back to step to step 3310 and avoid read pointer step 3460. If in step 3520, the branch had been predicted Taken, then a mis-prediction occurred. At this point a step 3530 supplies MISPREDICT active to the branch prediction circuitry, whereupon flush pipeline step 3480 and subsequent steps are performed.

In FIG. 9 a method 3600 of updating the wGHR 2140 commences with a BEGIN 3605 and then decodes a cache line in a step 3610. There, instructions from different instruction sets (ISA) are detected. Branch instructions are distinguished from other instructions. If no branch is on the cache line, then step 3620 loops back to step 3610. If there is a branch on the cache line, then operations go to a step 3630 to generate ISIZEMASK as a first function f1 of different branches from different ISAs on the cache line. Also, a step 3640 generates a BTBwayMASK as a second function f2 of LSBs from IA[2:1] and the PC-BTB in each BTB way, designated BTBwayPC[2:1]. A step 3650 generates a FETCHMASK as a third function f3 of PREDICTTAKEN, PREDADDR, and IA[2:1] delayed by a clock cycle in flops 2740D of FIG. 5.

A step 3660 generates BRMASK as a fourth function f4 of branch information from the decode step 3610, and the mask steps 3630, 3640, and 3650. Then a step 3670 generates branch count BRCNT as a fifth function f5 of BRMASK from step 3660. A value LookupGHR for updating wGHR 2140 is generated in steps 3680 and 3690. Step 3680 determines, depending on which of several possible values of BRCNT is present, an operation 3690.00, .01, .10, or .11 to perform. A respective series of selected wGHR bits is followed by a bit for Taken/Not-Taken (T/NT), or by a zero and T/NT, or two zeroes and T/NT, or by three zeroes and T/NT. This distinguishes and separates different branch histories depending on the context of Not-Taken branches on the cache line where they occur. The result is a string or pattern of bits LookupGHR at point 3695 in the process. Next a step 3710 determines whether a signal SelaGHR calls for reconstructing wGHR such as in the case of a mis-prediction. If not, then a step 3720 loads the wGHR 2140 with the series of bits constituting LookupGHR. If wGHR must be reconstructed based on step 3710, then a step 3730 advantageously loads wGHR 2140 with the contents of aGHR 2130 as appropriate to return to an earlier point in the sequence of cache lines, or an earlier point in a software program.

In FIG. 9, operations performed by circuitry of FIG. 6 proceed to step 3740 to access the GHB register file 2810 using the wGHR contents as index. Several bits are retrieved from the GHB and more process steps determine which of the several bits is to be the GHB branch prediction here. Now, a step 3750 further muxes the bits based on IA[2:1]. This produces a set of bits one-fourth as numerous in this example. A step 3760 hashes LSBs of wGHR with LSBs of PC-BTB such as by an XOR operation. Step 3770 muxes the bits from step 3750 based on the hash of step 3760. Step 3780 then muxes the remaining bits by the GHB Way Select of FIG. 6 to produce the GHB TAKEN bit representing Taken/Not-Taken. Step 3790 selects the predicted address of the next instruction by muxing PTA and PNTA using the Taken/Not-Taken signal from step 3780.

If there is a signal to stop, then operations reach RETURN 3815. Otherwise, if there is no signal to stop, then a decision step 3810 loops back and goes to step 3610 whereupon the process is repeated for each next cache line.

### PROCESSES OF MANUFACTURE

Manufacturing processes as described herein involve procedures as follows.
1) Prepare a particular design of the processor to have an instruction cache with cache lines, and a pipeline having at least one fetch stage and at least one decode stage.
2) Include in the design Register Transfer Language (RTL) or like form, an additional decode circuit having respective circuit portions situated for fetch purposes time-wise in parallel with the at least one fetch stage and the at least one decode stage.
3) Establish the RTL to define the additional decode circuit to respond to the cache line to generate at least one set of bits representing presence of plural branches in the cache line when plural branches occur and at least one different bit representing presence of a single branch in the cache line, and a pattern storing circuit to respond to the additional decode circuit to hold and update a pattern of predicted branches.
4) Arrange the coupling and timing of modules so that aGHR is established to act as a first storing circuit associated with the fetch stage to store a history of actual branches, and wGHR is established to act as a second storage circuit in the pattern storing circuit associated with the fetch stage to store a pattern of predicted branches. Couple the second storing circuit to the first storing circuit. Couple the execute stage back to the first storing circuit.
4) Verify the design of the processor in simulation.
5) Manufacture to produce a resulting processor according to the verified design.
6) Using scan chain methodology on the resulting processor to verify the contents and timing of the additional decode circuit and the pattern storing circuit.
7) Further use scan chain methodology on the resulting processor to verify the contents and timing of the first storing circuit, the second storing circuit and the execute stage. First-silicon is suitably checked by wafer testing techniques and by scan chain methodology to verify the contents and timing of Pre-Decode, Post-Decode, aGHR and wGHR, GHB, BTB output, and states and control signals in key flops in the circuitry as described herein. The pointer-based FIFO 1860 circuitry provides an additional advantage of facilitating testing because FIFO 1860 holds predicted taken target addresses that can be analyzed and verified.

Similarly, logic elements in the diagrams represent both electronic structures and process steps and portions of process flows. Flow diagram symbols herein represent process steps and portions of process flows in software and hardware embodiments as well as portions of structure in various embodiments of the invention.

A few preferred embodiments have been described in detail hereinabove. It is to be understood that the scope of the invention comprehends embodiments different from those described yet within the inventive scope. Processing circuitry comprehends digital, analog and mixed signal (digital/analog) integrated circuits, digital computer circuitry, ASIC circuits, PALs, PLAs, decoders, memories, non-software based processors, and other circuitry, and processing circuitry cores including microprocessors and microcomputers of any architecture, or combinations thereof. Internal and external couplings and connections can be ohmic, capacitive, direct or indirect via intervening circuits or otherwise as desirable. The terms "including", "includes", "having", "has", "with", or variants thereof are used in the description to denote non-exhaustive inclusion. It is therefore contemplated that the appended claims and their equivalents cover any such modifications and embodiments as fall within the scope of the invention.

## Claims

1. A processor (1700) operable to process a plurality of instructions including branch instructions, the processor comprising:
a fetch pipeline (1710) having branch prediction circuitry (1840) to provide an indication of a taken branch or a not taken branch and to store and supply respective predicted taken target addresses (PTTPCA) for some or all the branch instructions;
an execution pipeline (1740) having a branch execution circuit (1870); and
storage elements (2355) and control logic (2350) operable to establish a first-in-first-out (FIFO) circuit (1860) with a write pointer (WP1) and a first read pointer (RP1), wherein said control logic (2350) is coupled to said branch prediction circuitry (1840) to receive said indication of a taken or not taken branch;
wherein the control logic (2350) is responsive to an indication by the branch prediction circuitry (1840) that a given branch instruction is predicted to be a taken branch, to write a predicted taken target address (PTTPCA) to a storage element (2355) identified by the write pointer (WP1) and the predicted taken target address remaining stationary therein; **characterized in that** no predicted not-taken target addresses are stored in the storage elements (2355) of the FIFO circuit (1860), and wherein the control logic (2350) is further operable to read a predicted taken target address (PT) from a storage element (2355) identified by the first read pointer (RP1) to the branch execution circuit (1870), without the read predicted taken target address (PTTPCA) passing through a plurality of pipestages between the branch prediction circuitry (1840) and the branch execution circuit (1870).

2. The processor claimed in claim 1, further **characterized in that** said control logic (2350) is operable to change the value of the write pointer (WP 1) before writing another predicted taken target address.

3. The processor claimed in claims 1 and 2, further **characterized in that** said branch execution circuit (1870) is operable to generate a signal that a branch instruction is actually taken, and said control logic responsive to the signal to change the value of the first read pointer (RP1).

4. The processor claimed in any of claims 1-3, further **characterized in that** said branch execution circuit (1870) is operable to generate an actual target address (ATA) of a taken branch instruction and has a comparison circuit (2750) coupled to said FIFO to compare a predicted taken target address with the actual target address of the taken branch instruction.

5. The processor claimed in any of claims 1-5, further **characterized in that** the processor includes a static multiplexer (2756) with inputs coupled to said storage elements (2355) and a selector control responsive to the first read pointer (RP1).

6. The processor claimed in any of claims 1-6, further **characterized in that** said FIFO (1860) is coupled to also supply a predicted taken target address to a pipestage earlier in the pipeline than said branch execution circuit (1870), the earlier pipestage being operable for address calculation.

7. The processor claimed in any of claims 1-7, further **characterized in that** said execution pipeline includes a writeback stage and said FIFO includes a second read pointer (RP3), and the second read pointer (RP3) is responsive to retirement of an actual taken branch by said writeback stage.

8. The processor claimed in claim 8, wherein said processor has a replay circuit operable to reset the first read pointer (RP1) equal to said second read pointer.

9. A method of operating a processor (1700) having a pipeline having pipestages and executing branch instructions having targets, the method comprising
predicting an indication of whether a branch instruction is a taken branch or a not taken branch in branch prediction circuitry (1840);
supplying respective predicted taken target addresses (PTTPCA) for branch instructions; executing branch instructions having targets in branch execution circuitry (1870);
in response to an indication for a branch instruction is predicted to be a taken branch, writing a predicted taken target address (PTTPCA) to a storage element (2355) of a FIFO circuit (1860) identified by a write pointer (WP1) and the predicted taken target address remaining stationary therein, **characterized in that** no predicted not-taken target addresses are stored in the storage elements (2355) of the FIFO circuit (1860); and
reading a predicted taken target address (PT) from a storage element (2355) identified by a first read pointer (RP1) to a branch execution circuit (1870), without the read predicted taken target address (PTTPCA) passing through a plurality of pipestages between the branch prediction circuitry (1840) and the branch execution circuit (1870).

10. The method of claim 9, further comprising changing the value of the write pointer (WP1) before writing another predicted taken target address to the FIFO (1860).

11. The method of claims 9 or 10, further comprising generating a signal that a branch instruction is actually taken and changing the value of the first read pointer (RP1) in response to the signal.

12. The method of claims 9 or 10, further comprising generating a signal that a branch instruction is actually taken, comparing a predicted taken target address with the actual target address of the taken branch instruction and supplying a mis-prediction output based on a state of the comparison in response to the signal that the branch instruction is actually taken.

13. The method of any of claims 9 to 12, further comprising statically multiplexing the FIFO (1860) to read a predicted taken target address (PT) from the storage element (2355), without the read predicted taken target address (PTTPCA) passing through a plurality of pipestages between the branch prediction circuitry (1840) and the branch execution circuit (1870).

14. The method of any of claims 9 to 13, further comprising performing a writeback operation and operating a second read pointer (RP3) for the FIFO (1860) responsive to the writeback operation.

15. The method of claim 14, wherein operating the second read pointer includes adjusting the second read pointer (RP3) in response to retirement of an actual taken branch by the writeback operation.

16. The method of claim 15, further comprising initiating replay of some of the instructions and resetting the first pointer equal (RP1) to the second read pointer (RP3 upon initiation of the replay.

## Patentansprüche

1. Prozessor (1700), der betreibbar ist, um mehrere Befehle, die Verzweigungsbefehle enthalten, zu verarbeiten, wobei der Prozessor umfasst:
eine Hol-Pipeline (1710), die eine Verzweigungsvorhersage-Schaltungsanordnung (1840) besitzt, um eine Angabe einer genommenen Verzweigung oder einer nicht genommenen Verzweigung bereitzustellen und um jeweilige Adressen (PTTTCA) vorhergesagter genommener Ziele für einige oder alle Verzweigungsbefehle zu speichern und zu liefern;
eine Ausführungspipeline (1740), die eine Verzweigungsausführungsschaltung (1870) besitzt; und
Speicherelemente (2355) und eine Steuerlogik (2350), die betreibbar sind, um eine erste First-in-First-out-Schaltung (FIFO-Schaltung) (1860) mit einem Schreibzeiger (WP1) und einem ersten Lesezeiger (RP1) aufzubauen, wobei die Steuerlogik (2350) mit der Verzweigungsvorhersageschaltungsanordnung (1840) gekoppelt ist, um die Angabe einer genommenen oder nicht genommenen Verzweigung zu empfangen;
wobei die Steuerlogik (2350) in Reaktion auf eine Angabe durch die Verzweigungsvorhersageschaltungsanordnung (1840), dass ein gegebener Verzweigungsbefehl als eine genommene Verzweigung vorhergesagt wird, eine Adresse (PTTPCA) eines vorhergesagten genommenen Ziels in ein Speicherelement (2355) schreibt, das durch den Schreibzeiger (WP1) und die Adresse des vorhergesagten genommenen Ziels, die darin stationär bleibt, identifiziert wird; **dadurch gekennzeichnet, dass** keine Adressen vorhergesagter nicht genommener Ziele in den Speicherelementen (2355) der FIFO-Schaltung (1860) gespeichert werden und die Steuerlogik (2350) ferner betreibbar ist, um eine Adresse (PT) eines vorhergesagten genommenen Ziels aus einem Speicherelement (2355), das durch den ersten Lesezeiger (RP1) identifiziert wird, in die Verzweigungsausführungsschaltung (1870) zu lesen, ohne dass sich die gelesene Adresse (PTTPCA) des vorhergesagten genommenen Ziels durch mehrere Pipelinestufen zwischen der Verzweigungsvorhersageschaltungsanordnung (1840) und der Verzweigungsausführungsschaltung (1870) bewegt.

2. Prozessor nach Anspruch 1, ferner **dadurch gekennzeichnet, dass** die Steuerlogik (2350) betreibbar ist, um den Wert des Schreibzeigers (WP1) zu ändern, bevor eine weitere Adresse eines vorhergesagten genommenen Ziels geschrieben wird.

3. Prozessor nach den Ansprüchen 1 und 2, ferner **dadurch gekennzeichnet, dass** die Verzweigungsausführungsschaltung (1870) betreibbar ist, um ein Signal zu erzeugen, dass ein Verzweigungsbefehl tatsächlich genommen wird, und die Steuerlogik in Reaktion auf das Signal den Wert des ersten Lesezeigers (RP1) ändert.

4. Prozessor nach einem der Ansprüche 1-3, ferner **dadurch gekennzeichnet, dass** die Verzweigungsausführungsschaltung (1870) betreibbar ist, um eine Adresse (ATA) eines tatsächlichen Ziels eines Befehls einer genommenen Verzweigung zu erzeugen, und eine mit der FIFO gekoppelte Vergleichsschaltung (2750) besitzt, um eine Adresse eines vorhergesagten genommenen Ziels mit der Adresse des tatsächlichen Ziels des Befehls der genommenen Verzweigung zu vergleichen.

5. Prozessor nach einem der Ansprüche 1-5, ferner **dadurch gekennzeichnet, dass** der Prozessor einen statischen Multiplexer (2756) enthält, wovon Eingänge mit den Speicherelementen (2355) gekoppelt sind, und eine Auswahleinrichtungssteuerung enthält, die auf den ersten Lesezeiger (RP1) anspricht.

6. Prozessor nach einem der Ansprüche 1-6, ferner **dadurch gekennzeichnet, dass** die FIFO (1860) so angeschlossen ist, dass sie auch eine Adresse eines vorhergesagten genommenen Ziels an eine Pipelinestufe liefert, die in der Pipeline früher als die Verzweigungsausführungsschaltung (1870) angeordnet ist, wobei die frühere Pipelinestufe für eine Adressenberechnung betreibbar ist.

7. Prozessor nach einem der Ansprüche 1-7, ferner **dadurch gekennzeichnet, dass** die Ausführungspipeline eine Rückschreibstufe enthält und die FIFO einen zweiten Lesezeiger (RP3) enthält, wobei der zweite Lesezeiger (RP3) auf die Rücknahme einer genommenen tatsächlichen Verzweigung durch die Rückschreibstufe anspricht.

8. Prozessor nach Anspruch 8, wobei der Prozessor eine Wiedergabeschaltung besitzt, die betreibbar ist, um den ersten Lesezeiger (RP1) auf den zweiten Lesezeiger zurückzusetzen.

9. Verfahren zum Betreiben eines Prozessors (1700), der eine Pipeline mit Pipelinestufen besitzt und Verzweigungsbefehle, die Ziele haben, ausführt, wobei das Verfahren umfasst:
Vorhersagen einer Angabe, ob ein Verzweigungsbefehl eine genommene Verzweigung oder eine nicht genommene Verzweigung ist, in einer Verzweigungsvorhersageschaltungsanordnung (1840);
Liefern jeweiliger Adressen (PTTPCA) vorhergesagter genommener Ziele für Verzweigungsbefehle; Ausführen von Verzweigungsbefehlen, die Ziele haben, in der Verzweigungsausführungsschaltungsanordnung (1870);
in Reaktion auf eine Angabe, dass für einen Verzweigungsbefehl vorhergesagt wird, dass er eine genommene Verzweigung ist, Schreiben einer Adresse (PTTPCA) eines vorhergesagten genommenen Ziels in ein Speicherelement (2355) einer FIFO-Schaltung (1860), das durch einen Schreibzeiger (WP1) identifiziert wird, wobei die Adresse des vorhergesagten genommenen Ziels darin stationär bleibt, **dadurch gekennzeichnet, dass** keine Adressen vorhergesagter nicht genommener Ziele in den Speicherelementen (2355) der FIFO-Schaltung (1860) gespeichert werden; und
Lesen einer Adresse (PT) eines vorhergesagten genommenen Ziels aus einem Speicherelement (2355), das durch einen ersten Lesezeiger (RP1) identifiziert wird, in eine Verzweigungsausführungsschaltung (1870), ohne dass sich die gelesene Adresse (PTTPCA) des vorhergesagten genommenen Ziels durch mehrere Pipelinestufen zwischen der Verzweigungsvorhersageanordnung (1840) und der Verzweigungsausführungsschaltung (1870) bewegt.

10. Verfahren nach Anspruch 9, das ferner das Ändern des Wertes des Schreibzeigers (WP1) umfasst, bevor eine weitere Adresse eines vorhergesagten genommenen Ziels in die FIFO (1860) geschrieben wird.

11. Verfahren nach den Ansprüchen 9 oder 10, das ferner das Erzeugen eines Signals, dass ein Verzweigungsbefehl tatsächlich genommen wird, und das Ändern des Wertes des ersten Lesezeigers (RP1) in Reaktion auf das Signal umfasst.

12. Verfahren nach den Ansprüchen 9 oder 10, das ferner das Erzeugen eines Signals, dass ein Verzweigungsbefehl tatsächlich genommen wird, das Vergleichen einer Adresse eines vorhergesagten genommenen Ziels mit der Adresse des tatsächlichen Ziels des genommenen Verzweigungsbefehls und das Liefern eines Fehlvorhersageausgangs anhand eines Zustands des Vergleichs in Reaktion auf das Signal, dass der Verzweigungsbefehl tatsächlich genommen wird, umfasst.

13. Verfahren nach einem der Ansprüche 9 bis 12, das ferner das statische Multiplexieren der FIFO (1860) umfasst, um eine Adresse (PT) eines vorhergesagten genommenen Ziels aus dem Speicherelement (2355) zu lesen, ohne dass sich die Adresse (PTTPCA) des gelesenen vorhergesagten genommenen Ziels durch mehrere Pipelinestufen zwischen der Verzweigungsvorhersageschaltungsanordnung (1840) und der Verzweigungsausführungsschaltung (1870) bewegt.

14. Verfahren nach einem der Ansprüche 9 bis 13, das ferner das Ausführen einer Rückschreiboperation und das Betreiben eines zweiten Lesezeigers (RP3) für die FIFO (1860) in Reaktion auf die Rückschreiboperation umfasst.

15. Verfahren nach Anspruch 14, wobei das Betreiben des zweiten Lesezeigers das Einstellen des zweiten Lesezeigers (RP3) in Reaktion auf eine Rücknahme einer wirklichen genommenen Verzweigung durch die Rückschreiboperation umfasst.

16. Verfahren nach Anspruch 15, das ferner das Beginnen einer Wiedergabe einiger der Befehle und das Rücksetzen des ersten Zeigers (RP1) auf den zweiten Lesezeiger (RP3) beim Beginnen der Wiedergabe umfasst.

## Revendications

1. Processeur (1700) fonctionnel pour traiter une pluralité d'instructions comprenant des instructions de branchement, le processeur comprenant :
un pipeline d'extraction (1710) ayant des circuits de prévision de branchement (1840) de manière à fournir une indication d'un branchement pris ou d'un branchement non pris, et à stocker et à fournir des adresses cibles prises prévues respectives (PTTPCA) pour certaines des instructions de branchement, ou toutes les instructions de branchement ;
un pipeline d'exécution (1740) ayant un circuit d'exécution de branchement (1870) ; et
des éléments de stockage (2355) et une logique de commande (2350) fonctionnels pour établir un circuit (1860) de type premier entré, premier sorti (FIFO) avec un pointeur d'écriture (WP1) et un premier pointeur de lecture (RP1), dans lequel ladite logique de commande (2350) est couplée auxdits circuits de prévision de branchement (1840) de manière à recevoir ladite indication d'un branchement pris ou d'un branchement non pris ;
dans lequel la logique de commande (2350) est sensible à une indication fournie par les circuits de prévision de branchement (1840) selon laquelle une instruction de branchement donnée est prévue comme étant un branchement pris, pour écrire une adresse cible prise prévue (PTTPCA) dans un élément de stockage (2355) identifié par le pointeur d'écriture (WP1) et l'adresse cible prise prévue demeurant fixe à l'intérieur ; **caractérisé en ce qu'**aucune adresse cible non prise prévue n'est stockée dans les éléments de stockage (2355) du circuit FIFO (1860), et dans lequel la logique de commande (2350) est en outre fonctionnelle pour lire une adresse cible prise prévue (PT) à partir d'un élément de stockage (2355) identifié par le premier pointeur de lecture (RP1) vers le circuit d'exécution de branchement (1870), sans que l'adresse cible prise prévue lue (PTTPCA) passe à travers une pluralité d'étages de pipeline entre les circuits de prévision de branchement (1840) et le circuit d'exécution de branchement (1870).

2. Processeur selon la revendication 1, **caractérisé en outre en ce que** ladite logique de commande (2350) est fonctionnelle pour modifier la valeur du pointeur d'écriture (WP1) avant d'écrire une autre adresse cible prise prévue.

3. Processeur selon la revendication 1 et la revendication 2, **caractérisé en outre en ce que** ledit circuit d'exécution de branchement (1870) est fonctionnel pour générer un signal selon lequel une instruction de branchement est réellement prise, et ladite logique de commande est sensible au signal de manière à modifier la valeur du premier pointeur de lecture (RP1).

4. Processeur selon l'une quelconque des revendications 1 à 3, **caractérisé en outre en ce que** ledit circuit d'exécution de branchement (1870) est fonctionnel pour générer une adresse cible réelle (ATA) d'une instruction de branchement prise, et présente un circuit de comparaison (2750) couplé audit FIFO de manière à comparer une adresse cible prise prévue avec l'adresse cible réelle de l'instruction de branchement prise.

5. Processeur selon l'une quelconque des revendications 1 à 4, **caractérisé en outre en ce que** le processeur comprend un multiplexeur statique (2756) avec des entrées couplées auxdits éléments de stockage (2355), et une commande de sélecteur sensible au premier pointeur de lecture (RP1).

6. Processeur selon l'une quelconque des revendications 1 à 5, **caractérisé en outre en ce que** ledit FIFO (1860) est couplé de manière à fournir également une adresse cible prise prévue à un étage de pipeline plus tôt dans le pipeline que ledit circuit d'exécution de branchement (1870), l'étage de pipeline antérieur étant fonctionnel pour un calcul d'adresse.

7. Processeur selon l'une quelconque des revendications 1 à 6, **caractérisé en outre en ce que** ledit pipeline d'exécution inclut un étage de réécriture et ledit FIFO inclut un second pointeur de lecture (RP3), et le second pointeur de lecture (RP3) est sensible à l'abandon d'un branchement pris réel par ledit étage de réécriture.

8. Processeur selon la revendication 8, dans lequel ledit processeur présente un circuit de répétition fonctionnel pour rendre le premier pointeur de lecture (RP1) égal audit second pointeur de lecture.

9. Procédé d'actionnement d'un processeur (1700) qui présente un pipeline ayant des étages de pipeline et exécutant des instructions de branchement ayant des cibles, le procédé comprenant les étapes consistant à :
prévoir une indication selon laquelle une instruction de branchement est un branchement pris ou un branchement non pris dans des circuits de prévision de branchement (1840) ;
fournir des adresses cibles prises prévues respectives (PTTPCA) pour des instructions de branchement ;
exécuter les instructions de branchement ayant des cibles dans les circuits d'exécution de branchement (1870) ;
en réponse à une indication selon laquelle une instruction de branchement est prévue comme étant un branchement pris, écrire une adresse cible prise prévue (PTTPCA) dans un élément de stockage (2355) d'un circuit FIFO (1860) identifié par un pointeur d'écriture (WP1) et l'adresse cible prise prévue demeurant fixe à l'intérieur, **caractérisé en ce qu'**aucune adresse cible non prise prévue n'est stockée dans les éléments de stockage (2355) du circuit FIFO (1860) ; et
lire une adresse cible prise prévue (PT) à partir d'un élément de stockage (2355) identifié par un premier pointeur de lecture (RP1) vers un circuit d'exécution de branchement (1870), sans que l'adresse cible prise prévue lue (PTTPCA) passe à travers une pluralité d'étages de pipeline entre les circuits de prévision de branchement (1840) et le circuit d'exécution de branchement (1870).

10. Procédé selon la revendication 9, comprenant en outre l'étape consistant à modifier la valeur du pointeur d'écriture (WP1) avant d'écrire une autre adresse cible prise prévue dans le FIFO (1860).

11. Procédé selon la revendication 9 ou 10, comprenant en outre l'étape consistant à générer un signal selon lequel une instruction de branchement est réellement prise, et à modifier la valeur du premier pointeur de lecture (RP1) en réponse au signal.

12. Procédé selon la revendication 9 ou 10, comprenant en outre l'étape consistant à générer un signal selon lequel une instruction de branchement est prise réellement, à comparer une adresse cible prise prévue avec l'adresse cible réelle de l'instruction de branchement prise et à fournir une sortie de mauvaise prévision sur la base d'un état de la comparaison en réponse au signal selon lequel l'instruction de branchement est prise réellement.

13. Procédé selon l'une quelconque des revendications 9 à 12, comprenant en outre l'étape consistant à multiplexer de manière statique le FIFO (1860) afin de lire une adresse cible prise prévue (PT) à partir de l'élément de stockage (2355), sans que l'adresse cible prise prévue lue (PTTPCA) passe à travers une pluralité d'étages de pipeline entre les circuits de prévision de branchement (1840) et le circuit d'exécution de branchement (1870).

14. Procédé selon l'une quelconque des revendications 9 à 13, comprenant en outre l'étape consistant à exécuter une opération de réécriture et à actionner un second pointeur de lecture (RP3) du FIFO (1860) sensible à l'opération de réécriture.

15. Procédé selon la revendication 14, dans lequel l'étape consistant à actionner le second pointeur de lecture, inclut l'étape consistant à ajuster le second pointeur de lecture (RP3) en réponse à l'abandon d'un branchement pris réel par l'opération de réécriture.

16. Procédé selon la revendication 15, comprenant en outre l'étape consistant à lancer une répétition de certaines des instructions, et à rendre le premier pointeur de lecture (RP1) égal au second pointeur de lecture (RP3) lors du lancement de la répétition.
